# EUROPÄISCHE PATENTSCHRIFT

(11) **EP 3 183 738 B1**
(45) Veröffentlichungstag und Bekanntmachung des Hinweises auf die Patenterteilung: **20.08.2025**
(21) Anmeldenummer: 15719204.8
(22) Anmeldetag: 24.04.2015
(51) Int. Cl.: H01H 9/00, H01F 29/04, H02P 13/06

(54) **SCHALTANORDNUNG MIT ZWEI LASTSTUFENSCHALTERN, ELEKTRISCHE ANLAGE MIT EINER DERARTIGEN SCHALTANORDNUNG SOWIE DEREN VERWENDUNG**
SWITCHING ARRANGEMENT COMPRISING TWO ON-LOAD TAP CHANGERS, ELECTRIC SYSTEM COMPRISING A SWITCHING ARRANGEMENT OF SAID TYPE, AND USE THEREOF
ENSEMBLE DE COMMUTATION À DEUX CHANGEURS DE PRISES EN CHARGE, INSTALLATION ÉLECTRIQUE MUNIE D'UN TEL ENSEMBLE DE COMMUTATION ET UTILISATION DE CEUX-CI

(30) Priorität: 22.08.2014 DE 102014012266
(43) Veröffentlichungstag der Anmeldung: 28.06.2017
(73) Patentinhaber: Maschinenfabrik Reinhausen GmbH, 93059 Regensburg (DE)
(72) Erfinder: BÄUML, Gerhard, 93128 Regenstauf (DE); SHEIKO, Stanislav, 85221 Dachau (DE); SPÄTH, Matthias, 93059 Regensburg (DE); SHEN, Dazhong, 93073 Neutraubling (DE)
(86) Internationale Anmeldenummer: PCT/EP2015/058976
(87) Internationale Veröffentlichungsnummer: WO 2015/193011

(56) Entgegenhaltungen:
- DE-A1- 2 125 842
- DE-A1- 2 125 842
- DE-A1- 2 944 812
- JP-A- S55 121 618
- US-A- 3 546 569
- US-A- 3 546 569
- "Guide for the Application, Specification and Testing of Phase-Shifting Transformers", 21 June 2012 (2012-06-21), pages 1 - 42, XP082038161, Retrieved from the Internet <URL:https://api.iec.ch/harmonized/publications/download/79396> [retrieved on 20120621]

## Beschreibung

Die Erfindung betrifft eine Schaltanordnung mit zwei Laststufenschaltern, eine elektrische Anlage mit zwei Regelwicklungen und einer derartigen Schaltanordnung, die Verwendung einer derartigen Schaltanordnung sowie die Verwendung einer derartigen Anlage.

DE 19 50 466 A1 beschreibt eine regelbare Drosselspule, die eine Stammwicklung, eine Feinstufenwicklung mit mehreren Einzelstufen, einen Stufenschalter und zwischen jeweils zwei benachbarten Einzelstufen einen in lastromlosem Zustand zu schaltenden Anlenkschalter umfasst. Jeder Anlenkschalter kann die beiden jeweiligen Einzelstufen entweder in Reihe schalten oder einseitig an das Ende der Stammwicklung anlenken.

DE 29 44 812 A1 offenbart einen Dreiwicklungstransformator, wobei die Stammwicklungen und die Regelwicklungen mit je einem Laststufenschalter parallel zueinander geschaltet sind.

JP S55 121618 A offenbart ebenfalls einen Transformator mit zwei Laststufenschaltern, die mit der Lastableitung verbunden und somit parallel zueinander geschaltet sind.

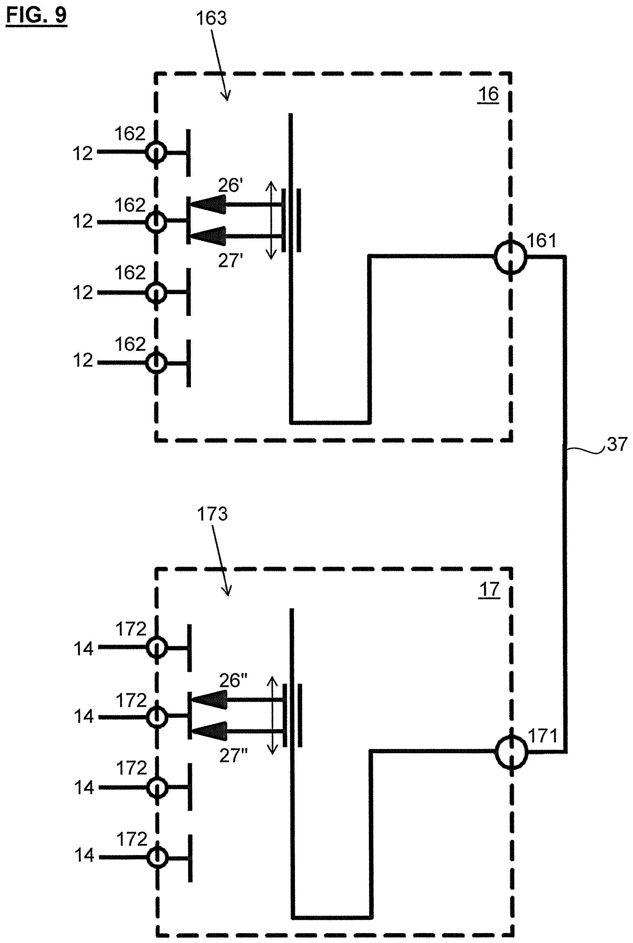

Die Publikation "Standard IEC 62032:2012, Guide for the Application, Specification and Testing of Phase-Shifting Transformers" zeigt in Figur 9 auf Seite 14 einen Phasenschiebertransformator mit einer Serienschaltung zweier Stufenschalter, bei der die erste und die zweite Ableitklemme verbunden sind.

Es ist weiterhin bekannt, in einem Regeltransformator eine Regelwicklung mit einer Stammwicklung in Reihe zu schalten, wobei die Anzapfungen der Regelwicklung über einen Laststufenschalter angewählt werden.

Vor diesem Hintergrund schlägt die Erfindung die Gegenstände der unabhängigen Ansprüche vor. Vorteilhafte Weiterbildungen und Ausführungsformen der Erfindung sind in den abhängigen Ansprüchen beschrieben.

Im Folgenden entspricht eine Formulierung der Art "A ist an B angebunden" einer Formulierung der Art "A ist mit B verbunden", umfasst eine Formulierung der Art "A ist mit B verbunden" die Bedeutungen "A ist direkt mit B elektrisch leitend verbunden" und "A ist indirekt, also über C, mit B elektrisch leitend verbunden", und hat eine Formulierung der Art "A ist an B angeschlossen" die Bedeutung "A ist direkt mit B elektrisch leitend verbunden".

Die Erfindung schlägt gemäß einem ersten Aspekt eine Schaltanordnung für eine elektrische Anlage mit einer ersten und einer zweiten Regelwicklung vor, umfassend
- einen ersten Laststufenschalter mit einer ersten Ableitklemme und wenigstens drei ersten Schaltklemmen, von denen wenigstens zwei mit zugeordneten ersten Anzapfungen der ersten Regelwicklung verbunden sein oder werden können;
- einen zweiten Laststufenschalter mit einer zweiten Ableitklemme und wenigstens drei zweiten Schaltklemmen, von denen wenigstens zwei mit zugeordneten zweiten Anzapfungen der zweiten Regelwicklung verbunden sein oder werden können;
   wobei
   - - wenigstens einer der Laststufenschalter einen Vorwähler mit zwei Vorwählerklemmen und einer Basisklemme umfasst;
- die zweite Ableitklemme mit der ersten Ableitklemme verbunden ist;
- die Verbindung der zweiten Ableitklemme (171) mit der ersten Ableitklemme (161) keine Abzweigung aufweist; und
- die Laststufenschalter (16, 17) durch diese Verbindung seriell geschaltet sind;
- wenigstens einer der Vorwähler (18) als Grobwähler ausgebildet ist;
- die Basisklemme (183) mit einem Ende der Regelwicklung (11, 13), die dem jeweiligen Laststufenschalter (16, 17) zugeordnet ist, verbunden werden kann;
- die Vorwählerklemmen (181, 182) mit den Enden einer Grobwicklung (19, 20), die mit dieser Regelwicklung (11, 13) induktiv gekoppelt ist, verbunden werden können.

Eine alternative Schaltanordnung zum dem ersten Aspekt der Erfindung ist im unabhängigen Anspruch 2 definiert. Bei dieser Alternative ist der Vorwähler als Wender ausgebildet.

Im Folgenden wird diejenige erste Schaltklemme, die mit der zweiten Schaltklemme verbunden ist, auch als "Verbindungsklemme" oder "erste Verbindungsklemme" bezeichnet, jede erste Schaltklemme, die einer der ersten Anzapfungen zugeordnet ist, auch als "erste Stufenklemme" bezeichnet und jede zweite Schaltklemme, die einer der zweiten Anzapfungen zugeordnet ist, auch als "zweite Stufenklemme" bezeichnet.

Bei der vorgeschlagenen Schaltanordnung sind somit wenigstens zwei der ersten Schaltklemmen auch erste Stufenklemmen und wenigstens zwei der zweiten Schaltklemmen auch zweite Stufenklemmen. Außerdem ist die zweite Ableitklemme mit der ersten Ableitklemme indirekt oder direkt elektrisch leitend verbunden. Im ersten Fall der Verbindung der zweiten Ableitklemme mit der ersten Ableitklemme ist eine erste Verbindungsklemme nicht erforderlich, sodass nicht nur wenigstens zwei, sondern wenigstens drei oder sämtliche ersten Schaltklemmen erste Stufenklemmen sein können.

Die vorgeschlagene Schaltanordnung ermöglicht, dass wahlweise zumindest ein Teil der ersten Regelwicklung und zumindest ein Teil der zweiten Regelwicklung seriell geschaltet sind oder zumindest ein Teil der ersten Regelwicklung und/oder zumindest ein Teil der zweiten Regelwicklung überbrückt sind, und ermöglicht somit eine starke Erweiterung des Regelbereichs und/oder Vergrößerung der Stufenzahl, ohne dass die Laststufenschalter für entsprechend höhere Spannungen und/oder Ströme ausgelegt werden müssen.

So können zum Beispiel in einer extremen Stellung der Schaltanordnung die Laststufenschalter nur einen minimalen Wicklungsbereich der ersten Regelwicklung mit einem minimalen Wicklungsbereich der zweiten Regelwicklung seriell schalten, was insgesamt zu einer minimalen effektiven Regelwindungszahl, also die Anzahl der vom Strom durchflossenen oder durchfließbaren Windungen der Regelwicklungen, führt. Die Schaltanordnung kann sogar beide Regelwicklungen komplett überbrücken, was zu einer effektiven Regelwindungszahl gleich Null führt. In einer anderen extremen Stellung der Schaltanordnung greifen die Laststufenschalter beispielhaft bei jeder Regelwicklung den maximalen, kompletten Wicklungsbereich ab und schalten diese seriell.

Die vorgeschlagene Schaltanordnung kann nach Bedarf auf beliebige Art und Weise ausgebildet sein, beispielsweise
- einphasig oder mehrphasig, insbesondere zweiphasig oder dreiphasig;
- und/oder derart, dass sie wenigstens einen oder keinen zusätzlichen Laststufenschalter umfasst.

Jeder Laststufenschalter kann nach Bedarf auf beliebige Art und Weise ausgebildet sein, beispielsweise
- einphasig oder mehrphasig, insbesondere zweiphasig oder dreiphasig;
- und/oder als Laststufenschalter mit mechanischen Schaltkontakten und/oder Vakuumschaltröhren und/oder Halbleiterschaltern;
- und/oder wie in DE 10 2009 043 171 A1 oder DE 10 2010 019 948 A1oder DE 10 2012 103 489 A1 oder WO 2012 079 666 A2 oder DE 10 2011 010 388 A1 oder DE 10 2011 012 080 A1 beschrieben;
- und/oder als Lastwähler oder als Lastschalter, also als Laststufenschalter mit Wähler und Lastumschalter;
- und/oder derart, dass er
   - baugleich oder unterschiedlich zu wenigstens einem der übrigen Laststufenschalter ist; und/oder
   - wenigstens eine zusätzliche Schaltklemme und/oder wenigstens eine zusätzliche Stufenklemme umfasst, und/oder
   - abhängig oder unabhängig von wenigstens einem der übrigen Laststufenschalter betätigt und/oder geschaltet und/oder angesteuert wird oder werden kann.

Jede Klemme kann nach Bedarf auf beliebige Art und Weise ausgebildet sein, beispielsweise als fester Kontakt oder sonstiger Anschluss.

Vorzugsweise ist vorgesehen oder spezifiziert, dass
- die Schaltanordnung einer bestimmten Phase der elektrischen Anlage zugeordnet ist;
   und/oder
- die Laststufenschalter derselben oder einer bestimmten Phase der elektrischen Anlage zugeordnet sind und/oder demselben oder einem bestimmten magnetischen Kreis zugeordnet sind, und/oder
- die zweite Ableitklemme nur oder ausschließlich mit der ersten Ableitklemme oder mit der ersten Verbindungsklemme verbunden ist; und/oder
- die zweite Ableitklemme mit der ersten Ableitklemme oder mit der ersten Verbindungsklemme seriell geschaltet ist; und/oder
- die indirekte Verbindung der zweiten Ableitklemme mit der ersten Ableitklemme oder mit der ersten Verbindungsklemme über einen elektrischen Zweipol, der beispielsweise wenigstens einen Widerstand und/oder wenigstens eine Induktivität und/oder wenigstens einen Kondensator und/oder wenigstens einen Schalter umfasst, erfolgt; und/oder
- die indirekte Verbindung der zweiten Ableitklemme mit der ersten Ableitklemme oder mit der ersten Verbindungsklemme nicht über eine der Wicklungen der elektrischen Anlage und/oder nicht über einen der Laststufenschalter erfolgt.

Es ist vorgesehen oder spezifiziert, dass die zweite Ableitklemme mit der ersten Ableitklemme verbunden ist.

Die Netzleitung kann nach Bedarf auf beliebige Art und Weise ausgebildet sein und beispielsweise einer Phase des Wechselstromnetzes oder als Neutralleiter einem Neutralpunkt oder Sternpunkt des Wechselstromnetzes zugeordnet sein.

Falls das Wechselstromnetz mehr als eine Phase hat, so kann beispielsweise die vorgeschlagene Schaltanordnung entsprechend mehrphasig ausgebildet sein. Alternativ kann beispielsweise für jede Phase eine der vorgeschlagenen Schaltanordnungen in einphasiger Ausbildung vorgesehen oder vorhanden sein, die mit der jeweiligen Netzleitung verbunden ist oder werden kann.

Es kann vorgesehen oder spezifiziert sein, dass wenigstens zwei Laststufenschalter derart gekoppelt sind, dass sie gleichsinnig und insbesondere synchron schalten.

Dabei bedeutet "gleichsinnig schalten", dass jeder der gekoppelten Laststufenschalter die effektive Windungszahl bezogen auf den magnetischen Fluss vergrößert oder verkleinert. Vorzugsweise ist spezifiziert, dass der erste und zweite Laststufenschalter in einem gemeinsamen Schaltgerät zusammengefasst oder durch ein gemeinsames Schaltgerät realisiert oder gebildet sind.

Vorzugsweise ist spezifiziert, dass das Schaltgerät ein Gestell umfasst, an dem zumindest der erste und zweite Laststufenschalter angebracht sind.

Vorzugsweise ist spezifiziert, dass
- der erste Laststufenschalter einen ersten Lastumschalter und einen ersten Wähler umfasst;
- der zweite Laststufenschalter einen zweiten Lastumschalter und einen zweiten Wähler umfasst;
- das Gestell ein Lastumschaltergestell und ein Wählergestell umfasst;
- die Lastumschalter an dem Lastumschaltergestell und die Wähler an dem Wählergestell angebracht sind.

Die Erfindung schlägt gemäß einem zweiten Aspekt eine elektrische Anlage gemäβ Anspruch 5 vor.

Die vorgeschlagene Anlage kann nach Bedarf auf beliebige Art und Weise ausgebildet sein, beispielsweise
- einphasig oder mehrphasig, insbesondere zweiphasig oder dreiphasig;
- und/oder derart, dass sie wenigstens eine oder keine zusätzliche Regelwicklung und/oder wenigstens eine Stammwicklung umfasst.

Erfindungsgemäß umfasst die vorgeschlagene Anlage wenigstens eine Grobwicklung.

Falls die Anlage mehrphasig ausgebildet ist, so kann beispielsweise die Schaltanordnung ebenfalls entsprechend mehrphasig ausgebildet sein. Alternativ kann beispielsweise für jede Phase eine einphasige Schaltanordnung vorgesehen oder vorhanden sein. Mehrere einphasige Schaltanordnungen können beispielsweise in Sternschaltung oder Dreieckschaltung zusammengeschaltet sein.

Jede Regelwicklung kann nach Bedarf auf beliebige Art und Weise ausgebildet sein, beispielsweise derart, dass sie
- eine separate Wicklung oder einen Teil oder Abschnitt einer Gesamtwicklung, die insbesondere außerdem wenigstens eine der übrigen Regelwicklungen und/oder wenigstens eine Stammwicklung umfasst, bildet; und/oder
- von den übrigen Regelwicklungen galvanisch getrennt oder mit wenigstens einer der übrigen Regelwicklungen seriell geschaltet ist; und/oder
- baugleich oder unterschiedlich zu wenigstens einer der übrigen Regelwicklungen ist;
   und/oder
- wenigstens eine oder keine zusätzliche Anzapfung umfasst.

Jede Schaltanordnung kann nach Bedarf auf beliebige Art und Weise ausgebildet sein, beispielsweise wie eine der gemäß dem ersten Aspekt vorgeschlagenen Schaltanordnungen.

Vorzugsweise ist vorgesehen oder spezifiziert, dass
- die Anlage eine erste Anlagenklemme, die mit der ersten Regelwicklung verbunden ist, und eine zweite Anlagenklemme, die mit der zweiten Regelwicklung verbunden ist, hat;
- insbesondere die erste Anlagenklemme mit einem ersten Ende der ersten Regelwicklung verbunden ist und/oder die zweite Anlagenklemme mit einem ersten Ende der zweiten Regelwicklung oder mit der ersten Ableitklemme verbunden ist.

Über die Anlagenklemmen kann die Anlage beispielsweise mit einem Wechselstromnetz verbunden werden.

Falls das Wechselstromnetz mehr als eine Phase hat, so kann beispielsweise die vorgeschlagene Anlage entsprechend mehrphasig ausgebildet sein und für jede Phase der entsprechende Anlagenteil mit einer jeweiligen Netzleitung des Wechselstromnetzes verbunden sein oder werden. Alternativ kann beispielsweise für jede Phase eine der vorgeschlagenen Anlagen in einphasiger Ausbildung vorgesehen oder vorhanden sein, die mit der jeweiligen Netzleitung verbunden ist oder werden kann.

Jede Ableitklemme kann beispielsweise mit Masse oder mit Erdpotenzial oder mit einem Sternpunkt oder mit einem Eckpunkt einer Dreieckschaltung oder mit einer Anlagenklemme der elektrischen Anlage oder mit einer Ableitung der elektrischen Anlage oder mit einer Netzleitung verbunden sein oder werden. Die Ableitung ihrerseits kann beispielsweise mit Masse oder Erdpotenzial oder einem Sternpunkt oder einem Eckpunkt einer Dreieckschaltung verbunden sein oder werden.

Jede Netzleitung kann nach Bedarf auf beliebige Art und Weise ausgebildet sein und beispielsweise einer Phase des Wechselstromnetzes oder als Neutralleiter einem Neutralpunkt oder Sternpunkt des Wechselstromnetzes zugeordnet sein.

Es kann vorgesehen oder spezifiziert sein, dass die Anlage umfasst eine Stammwicklung, die mit wenigstens einer Regelwicklung induktiv gekoppelt ist und insbesondere seriell geschaltet ist.

Erfindungsgemäß ist vorgesehen, dass wenigstens ein Laststufenschalter einen Vorwähler mit zwei Vorwählerklemmen und einer Basisklemme umfasst.

Der Vorwähler kann nach Bedarf auf beliebige Art und Weise ausgebildet sein, beispielsweise
- als Wender oder Grobwähler oder Mehrfachgrobwähler;
- und/oder derart, dass er wenigstens eine oder keine zusätzliche Vorwählerklemme umfasst.

Es kann vorgesehen oder spezifiziert sein, dass
- wenigstens ein Vorwähler als Wender ausgebildet ist;
- die Vorwählerklemmen mit den Enden der Regelwicklung, die dem jeweiligen Laststufenschalter zugeordnet ist, verbunden sind;
- die Basisklemme mit einer ersten Anlagenklemme der Anlage oder mit einem Ende einer Stammwicklung, die mit dieser Regelwicklung induktiv gekoppelt ist, verbunden ist.

Erfindungsgemäß ist vorgesehen oder spezifiziert, dass die Anlage umfasst
- eine Grobwicklung, die mit der Regelwicklung, die einem der einen Vorwähler umfassenden Laststufenschalter zugeordnet ist, induktiv gekoppelt und insbesondere von dieser galvanisch getrennt ist;
   wobei
- dieser Vorwähler als Grobwähler ausgebildet ist;
- die Vorwählerklemmen mit den Enden der Grobwicklung verbunden sind;
- die Basisklemme mit einem Ende dieser Regelwicklung verbunden ist.

Es kann vorgesehen oder spezifiziert sein, dass
- bei wenigstens einer der Regelwicklungen der Flächeninhalt des Leitungsquerschnitts konstant ist; und/oder
- wenigstens zwei Regelwicklungen induktiv gekoppelt sind und/oder von demselben oder einem bestimmten magnetischen Fluss durchsetzt werden und/oder derselben oder einer bestimmten Phase zugeordnet sind und/oder auf einem gemeinsamen Magnetkern sitzen und/oder demselben oder einem bestimmten magnetischen Kreis zugeordnet sind; und/oder
- die Regelwicklungen über die Laststufenschalter in Serie geschaltet sind.

Erfindungsgemäß ist vorgesehen oder spezifiziert, dass die Anlage als Kompensationsdrossel ausgebildet ist.

Es kann vorgesehen oder spezifiziert sein, dass die Anlage als Regeltransformator mit einer Primärseite und einer Sekundärseite ausgebildet ist oder zumindest einen Teil eines Regeltransformators mit einer Primärseite und einer Sekundärseite bildet, wobei die Regelwicklungen zumindest einen Teil der Primärseite oder Sekundärseite bilden.

Es kann vorgesehen oder spezifiziert sein, dass der Regeltransformator als Stromrichtertransformator ausgebildet ist.

Stromrichtertransformatoren, auch als HGÜ-Transformatoren bezeichnet, werden in Stromrichterstationen verwendet, in denen bei der Hochspannungs-Gleichstrom-Übertragung (HGÜ) die Umwandlung von Drehstrom in Gleichstrom und umgekehrt erfolgt.

Es kann vorgesehen oder spezifiziert sein, dass eine Schaltanordnung, die gemäß dem ersten Aspekt ausgebildet ist, für das Steuern und/oder Regeln und/oder Einstellen und/oder Schalten einer elektrischen Anlage, die eine erste und eine zweite Regelwicklung umfasst und die insbesondere gemäß dem zweiten Aspekt ausgebildet ist, verwendet wird.

Es kann vorgesehen oder spezifiziert sein, dass
- das Steuern und/oder Regeln und/oder Einstellen und/oder Schalten dadurch erfolgt, dass bei jeder der Regelwicklungen die effektive Regelwindungszahl geändert wird; und/oder
- die Anlage als Kompensationsdrossel oder als Regeltransformator oder als Stromrichtertransformator ausgebildet ist.

Es kann vorgesehen sein, dass eine elektrische Anlage, die gemäß dem zweiten Aspekt ausgebildet ist, als Kompensationsdrossel oder Regeltransformator oder Stromrichtertransformator verwendet wird.

Die Erfindung schlägt gemäß einem dritten Aspekt ein Schaltgerät für eine elektrische Anlage mit einer ersten und einer zweiten Regelwicklung vor, umfassend eine Schaltanordnung, die gemäß dem ersten Aspekt ausgebildet ist.

Vorzugsweise ist spezifiziert, dass das Schaltgerät ein Gestell umfasst, an dem zumindest der erste und zweite Laststufenschalter angebracht sind.

Vorzugsweise ist spezifiziert, dass
- der erste Laststufenschalter einen ersten Lastumschalter und einen ersten Wähler umfasst;
- der zweite Laststufenschalter einen zweiten Lastumschalter und einen zweiten Wähler umfasst;
- das Gestell ein Lastumschaltergestell und ein Wählergestell umfasst;
- die Lastumschalter an dem Lastumschaltergestell und die Wähler an dem Wählergestell angebracht sind.

Es kann vorgesehen sein, dass ein Schaltgerät in einer Schaltanordnung, die gemäß dem ersten Aspekt ausgebildet ist, als gemeinsames Schaltgerät verwendet wird, in dem der erste und zweite Laststufenschalter als Baueinheit zusammengefasst sind oder das den ersten und zweiten Laststufenschalter realisiert oder bildet.

Vorzugsweise ist das Schaltgerät gemäß dem dritten Aspekt ausgebildet.

Es kann vorgesehen sein, dass ein Schaltgerät, das gemäß dem dritten Aspekt ausgebildet ist, zur Herstellung einer Schaltanordnung verwendet wird, die gemäß dem ersten Aspekt ausgebildet ist.

Die Ausführungen und Erläuterungen zu einem der Aspekte der Erfindung, insbesondere zu einzelnen Merkmalen dieses Aspektes, gelten entsprechend auch analog für die anderen Aspekte der Erfindung.

Im Folgenden werden Ausführungsformen der Erfindung beispielhaft anhand der beigefügten Zeichnungen näher erläutert. Die daraus hervorgehenden einzelnen Merkmale sind jedoch nicht auf die einzelnen Ausführungsformen beschränkt, sondern können mit weiter oben beschriebenen einzelnen Merkmalen und/oder mit einzelnen Merkmalen anderer Ausführungsformen verbunden und/oder kombiniert werden. Die Einzelheiten in den Zeichnungen sind nur erläuternd, nicht aber beschränkend auszulegen. Die in den Ansprüchen enthaltenen Bezugszeichen sollen den Schutzbereich der Erfindung in keiner Weise beschränken, sondern verweisen lediglich auf die in den Zeichnungen gezeigten Ausführungsformen.

Die Zeichnungen zeigen in
FIG. 1 eine e elektrische Anlage mit zwei Regelwicklungen und einer ersten Ausführungsform einer Schaltanordnung die nicht gemäß der vorliegenden Erfindung sind;
FIG. 2 eine zweite Ausführungsform der Anlage mit einer zweiten Ausführungsform der Schaltanordnung gemäß der Erfindung.
FIG. 3 eine dritte Ausführungsform der Anlage mit einer dritten Ausführungsform der Schaltanordnung gemäß der Erfindung;
FIG. 4 eine vierte Ausführungsform der Anlage die nicht gemäß der vorliegenden Erfindung ist;
FIG. 5 eine fünfte Ausführungsform der Anlage die nicht gemäß der vorliegenden Erfindung ist;
FIG. 6 eine sechste Ausführungsform der Anlage mit einer vierten Ausführungsform der Schaltanordnung die nicht gemäß der vorliegenden Erfindung sind;
FIG. 7 eine siebente Ausführungsform der Anlage mit einer fünften Ausführungsform der Schaltanordnung die nicht gemäß der vorliegenden Erfindung sind;
FIG. 8 eine erste Ausführungsform eines Laststufenschalters für die Schaltanordnung;
FIG. 9 eine zweite Ausführungsform des Laststufenschalters;
FIG. 10 eine achte Ausführungsform der Anlage mit einer sechsten Ausführungsform der Schaltanordnung die nicht gemäß der vorliegenden Erfindung sind;
FIG. 11 eine neunte Ausführungsform der Anlage mit einer siebenten Ausführungsform der Schaltanordnung die nicht gemäß der vorliegenden Erfindung sind;
FIG. 12 eine zehnte Ausführungsform der Anlage mit einer achten Ausführungsform der Schaltanordnung die nicht gemäß der vorliegenden Erfindung sind;
FIG. 13 eine elfte Ausführungsform der Anlage mit einer neunten Ausführungsform der Schaltanordnung, die gemäß der Erfindung sind;
FIG. 14 eine zwölfte Ausführungsform der Anlage mit einer zehnten Ausführungsform der Schaltanordnung, die gemäß der Erfindung sind;
FIG. 15 eine elfte Ausführungsform der Schaltanordnung;
FIG. 16 ein Schnitt längs der Achse A-A;
FIG. 17 ein Schnitt längs der Achse B-B;
FIG. 18 ein Schnitt längs der Achse C-C;
FIG. 19 ein Schnitt längs der Achse D-D.

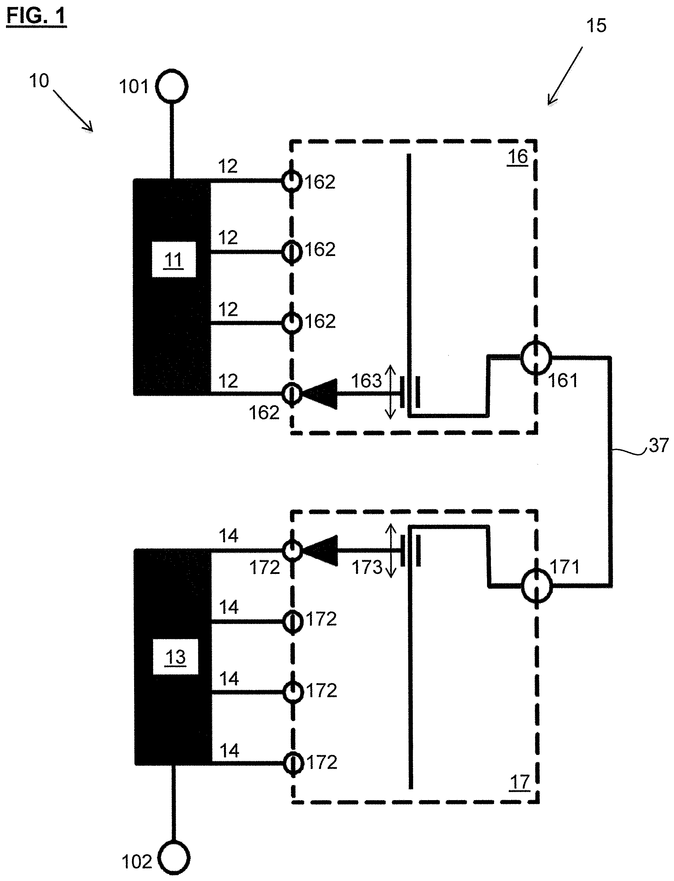

In FIG. 1 ist eine erste Ausführungsform einer elektrischen Anlage 10 schematisch dargestellt, die beispielhaft eine regelbare Kompensationsdrossel zum Bereitstellen und/oder Ändern und/oder Beeinflussen von Blindleistung in einem Wechselstromnetz (nicht dargestellt) bildet. Die Anlage 10 hat eine erste und zweite Anlagenklemme 101, 102, die an Netzleitungen (nicht dargestellt) des Wechselstromnetzes angeschlossen sind oder werden können.

Bei dieser Ausführungsform umfasst die Anlage 10 eine erste Regelwicklung 11 mit vier ersten Anzapfungen 12, eine zweite Regelwicklung 13 mit vier zweiten Anzapfungen 14 und eine Schaltanordnung 15, die gemäß einer ersten Ausführungsform ausgebildet ist. Bei dieser Ausführungsform umfasst die Schaltanordnung 15 einen ersten Laststufenschalter 16 mit einer Ableitklemme 161, auch als erste Ableitklemme 161 bezeichnet, vier Schaltklemmen 162, auch als erste Schaltklemmen 162 bezeichnet, und einem Bewegtkontaktsystem 163, auch als erstes Bewegtkontaktsystem 163 bezeichnet, sowie einen zweiten Laststufenschalter 17 mit einer Ableitklemme 171, auch als zweite Ableitklemme 171 bezeichnet, vier Schaltklemmen 172, auch als zweite Schaltklemmen 172 bezeichnet, und einem Bewegtkontaktsystem 173, auch als zweites Bewegtkontaktsystem 173 bezeichnet.

Die ersten Schaltklemmen 162 sind jeweils den ersten Anzapfungen 12 zugeordnet und mit diesen direkt verbunden und werden auch als erste Stufenklemmen bezeichnet. Die zweiten Schaltklemmen 172 sind jeweils den zweiten Anzapfungen 14 zugeordnet und mit diesen direkt verbunden und werden auch als zweite Stufenklemmen bezeichnet. Die zweite Ableitklemme 171 ist mit der ersten Ableitklemme 161 direkt verbunden.

Jedes Bewegtkontaktsystem 163/173 ist mit der jeweiligen Ableitklemme 161/171 verbunden und kann wahlweise mit jeder der jeweiligen Stufenklemmen 162/172 in elektrischen Kontakt gebracht werden.

Die in der FIG. 1 oberste erste Anzapfung 12 ist an das obere, erste Ende der ersten Regelwicklung 11 und an die erste Anlagenklemme 101 angeschlossen, und die unterste erste Anzapfung 12 ist an das untere, zweite Ende der ersten Regelwicklung 11 angeschlossen beziehungsweise bildet dieses zweite Ende. Die unterste zweite Anzapfung 14 ist an das untere, erste Ende der zweiten Regelwicklung 13 und an die zweite Anlagenklemme 102 angeschlossen, und die oberste zweite Anzapfung 14 ist an das obere, zweite Ende der zweiten Regelwicklung 13 angeschlossen beziehungsweise bildet dieses zweite Ende.

Zwischen das erste Ende der ersten Regelwicklung 11 und die erste Anlagenklemme 101 und/oder zwischen das erste Ende der zweiten Regelwicklung 13 und die zweite Anlagenklemme 102 kann jeweils beispielsweise wenigstens eine Stammwicklung (nicht dargestellt) und/oder wenigstens eine zusätzliche Regelwicklung (nicht dargestellt) in Serie geschaltet sein.

Bei dieser Ausführungsform sind die Regelwicklungen 11, 13 galvanisch voneinander getrennt und sitzen auf einem gemeinsamen Magnetkern (nicht dargestellt), sodass sie induktiv gekoppelt sind und von demselben magnetischen Fluss durchsetzt werden.

Bei dieser Ausführungsform sind die Regelwicklungen 11, 13 baugleich und die Laststufenschalter 16, 17 derart gekoppelt, dass sie gleichsinnig und synchron schalten. Dies bedeutet, dass die Bewegtkontaktsysteme 163, 173 gleichzeitig zu dem ersten oder zweiten Ende der jeweiligen Regelwicklung 11, 13 hin bewegt werden. Falls beispielsweise das erste Bewegtkontaktsystem 163 in der FIG. 1 nach oben zum ersten Ende der ersten Regelwicklung 11 hin bewegt wird, so wird gleichzeitig das zweite Bewegtkontaktsystem 173 nach unten zum ersten Ende der zweiten Regelwicklung 13 hin bewegt, und umgekehrt. Es ist aber auch möglich, dass die Bewegtkontaktsysteme 163, 173 zeitlich unabhängig voneinander und/oder in beliebiger Richtung bewegt werden können.

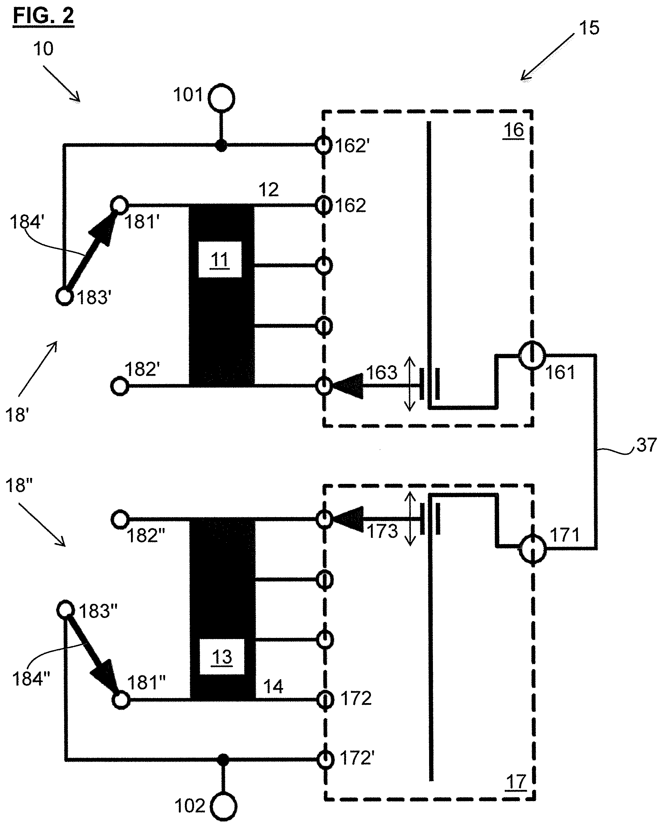

In FIG. 2 ist eine zweite Ausführungsform der Anlage 10 schematisch dargestellt. Diese Ausführungsform ähnelt der ersten Ausführungsform aus FIG. 1, sodass im Folgenden vor Allem die Unterschiede näher erläutert werden.

Bei dieser Ausführungsform ist die Schaltanordnung 15 gemäß einer zweiten Ausführungsform ausgebildet, die der ersten Ausführungsform aus FIG. 1 ähnelt, sodass im Folgenden vor Allem die Unterschiede näher erläutert werden.

Bei dieser Ausführungsform umfasst jeder Laststufenschalter 16/17 einen als Wender ausgebildeten Vorwähler 18'/18" mit zwei Vorwählerklemmen 181'/181", 182'/182", einer Basisklemme 183'/183" und einem Bewegtkontakt 184'/184", der mit der jeweiligen Basisklemme 183'/183" verbunden ist und wahlweise mit jeder der jeweiligen Vorwählerklemmen 181'/181", 182'/182" in elektrischen Kontakt gebracht werden kann. Bei jedem Laststufenschalter 16/17 ist die erste Vorwählerklemme 181'/181" mit dem ersten Ende der jeweiligen Regelwicklung 11/13, die zweite Vorwählerklemme 182'/182" mit dem zweiten Ende der jeweiligen Regelwicklung 11/13 und die Basisklemme 183'/183" mit der jeweiligen Anlagenklemme 101/102 direkt verbunden.

Diese Ausführungsform erlaubt die Umschaltung der Anschlussrichtung jeder der Regelwicklungen 11,13 als auch deren Überbrückung.

Vorzugsweise umfasst jeder Laststufenschalter 16/17 eine zusätzliche Schaltklemme 162'/172', die von dem jeweiligen Bewegtkontaktsystem 163/173 kontaktiert werden kann und mit der jeweiligen Basisklemme 183, aber nicht mit einer der jeweiligen Anzapfungen 12/14 verbunden ist. Diese zusätzliche Schaltklemmen werden auch als Kommutierungsklemmen 162'/172' bezeichnet.

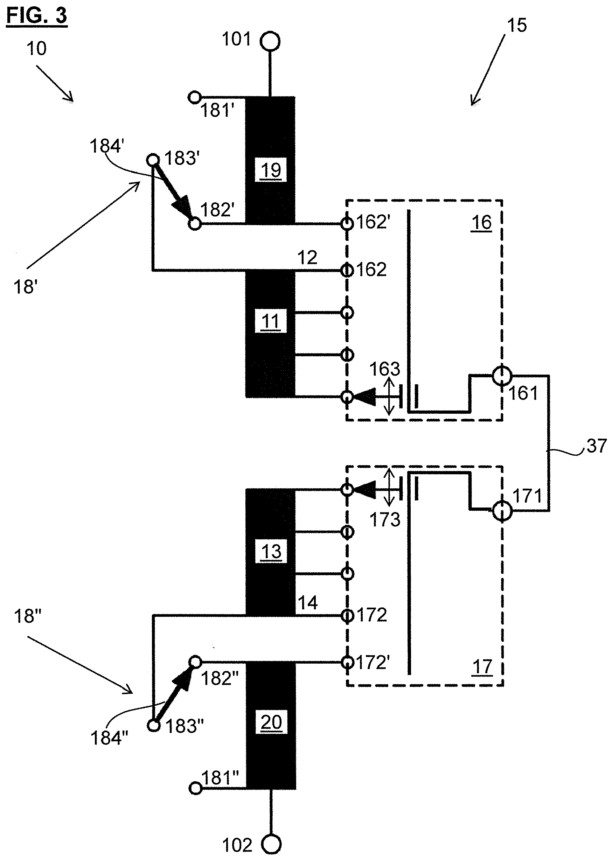

In FIG. 3 ist eine dritte Ausführungsform der Anlage 10 schematisch dargestellt. Diese Ausführungsform ähnelt der zweiten Ausführungsform aus FIG. 2, sodass im Folgenden vor Allem die Unterschiede näher erläutert werden.

Bei dieser Ausführungsform umfasst die Anlage 10eine erste Grobwicklung 19, die mit der ersten Regelwicklung 11 induktiv gekoppelt und von dieser galvanisch getrennt ist, und eine zweite Grobwicklung 20, die mit der zweiten Regelwicklüng 13 indüktiv gekoppelt und von dieser galvanisch getrennt ist. Das in der FIG. 3 obere, erste Ende der ersten Grobwicklung 19 an die erste Anlagenklemme 101 angeschlossen, und das untere, zweite Ende der ersten Grobwicklung 19 ist mit der ersten Kommutierungsklemme 162' verbunden. Das untere, erste Ende der zweiten Grobwicklung 20 ist an die zweite Anlagenklemme 102 angechlossen, und das obere, zweite Ende der zweiten Grobwicklung 20 ist mit der zusätzlichen zweiten Kommutierungsklemme 172' verbunden.

Bei dieser Ausführungsform ist die Schaltanordnung 15 gemäß einer dritten Ausführungsform ausgebildet, die der zweiten Ausführungsform aus FIG. 2 ähnelt, sodass im Folgenden vor Allem die Unterschiede näher erläutert werden.

Bei dieser Ausführungsform ist jeder Vorwähler 18'/18" als Grobwähler ausgebildet. Bei jedem Laststufenschalter 16/17 ist die jeweilige erste Vorwählerklemme 181'/181" mit dem ersten Ende der jeweiligen Grobwicklung 19/20, die jeweilige zweite Vorwählerklemme 182'/182" mit dem zweiten Ende der jeweiligen Grobwicklung 19/20 und die jeweilige Basisklemme 183'/183" mit dem ersten Ende der jeweiligen Regelwicklung 11/13 direkt verbunden.

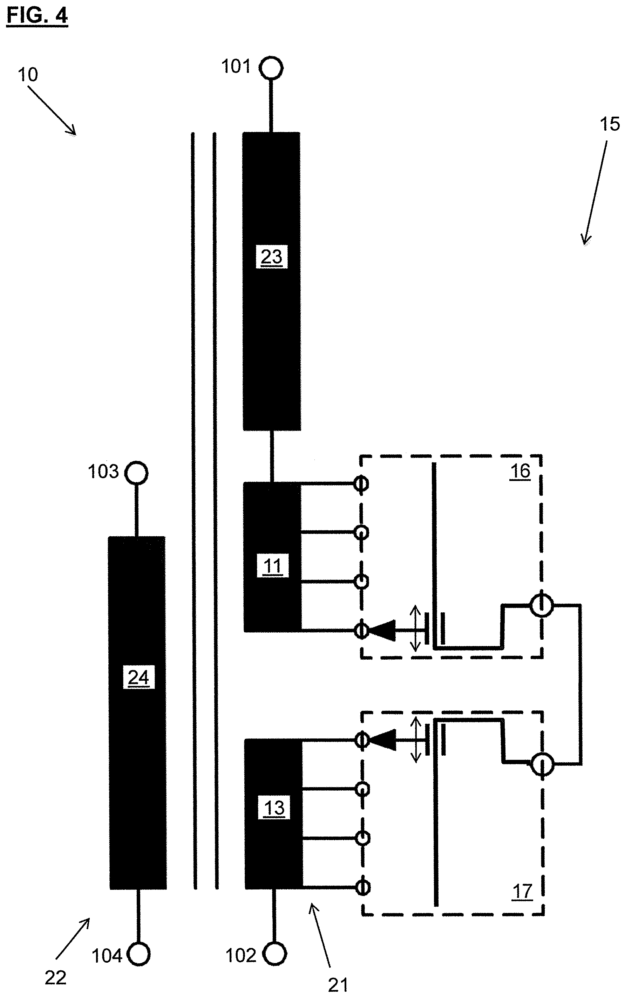

In FIG. 4 ist eine vierte Ausführungsform der Anlage 10 schematisch dargestellt. Diese Ausführungsform ähnelt der ersten Ausführungsform aus FIG. 1, sodass im Folgenden vor Allem die Unterschiede näher erläutert werden.

Bei dieser Ausführungsform bildet die Anlage 10 beispielhaft einen einphasigen Regeltransformator mit einer Oberspannungs- oder Primärseite 21 und einer Unterspannungs- oder Sekundärseite 22. Die Anlage 10 hat eine dritte und vierte Anlagenklemme 103, 104, die an Netzleitungen (nicht dargestellt) des Wechselstromnetzes oder eines anderen Wechselstromnetzes (nicht dargestellt) angeschlossen sind oder werden können. Die Regelwicklungen 11, 13 bilden einen Teil der Primärseite 21. Die Anlage 10 umfasst auf der Primärseite 21 eine erste Stammwicklung 23, die mit der ersten Regelwicklung 11 induktiv gekoppelt und seriell geschaltet ist, und auf der Sekundärseite 22 eine zweite Stammwicklung 24, die mit den Wicklungen 11, 13, 21 der Primärseite 21 induktiv gekoppelt und von diesen galvanisch getrennt ist. Die erste Stammwicklung 23 ist zwischen das erste Ende der ersten Regelwicklung 11 und die erste Anlagenklemme 101 in Serie geschaltet. Das in der FIG. 4 obere Ende der zweiten Stammwicklung 24 ist mit der dritten Anlagenklemme 103 verbunden, das untere Ende mit der vierten Anlagenklemme 104.

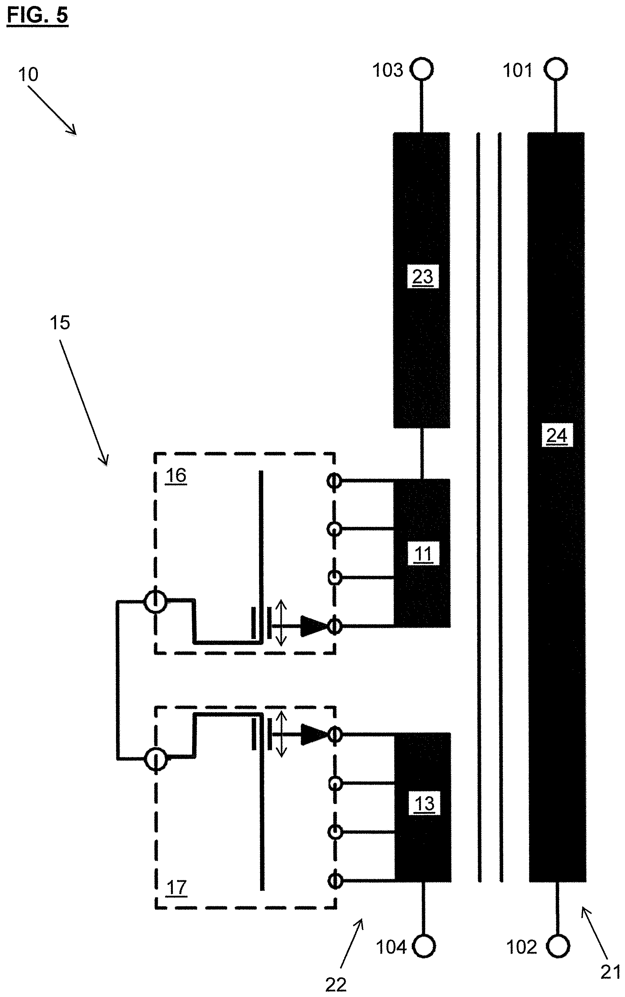

In FIG. 5 ist eine fünfte Ausführungsform der Anlage 10 schematisch dargestellt. Diese Ausführungsform ähnelt der vierten Ausführungsform aus FIG. 4, sodass im Folgenden vor Allem die Unterschiede näher erläutert werden.

Bei dieser Ausführungsform bilden die Regelwicklungen 11, 13 und die erste Stammwicklung 23 die Sekundärseite 22 und sind nicht zwischen die erste und zweite Anlagenklemme 101, 102, sondern zwischen die dritte und vierte Anlagenklemme 103, 104 geschaltet. Die zweite Stammwicklung 26 bildet die Sekundärseite 22 und ist nicht zwischen die dritte und vierte Anlagenklemme 103, 104, sondern zwischen die erste und zweite Anlagenklemme 101, 102 geschaltet.

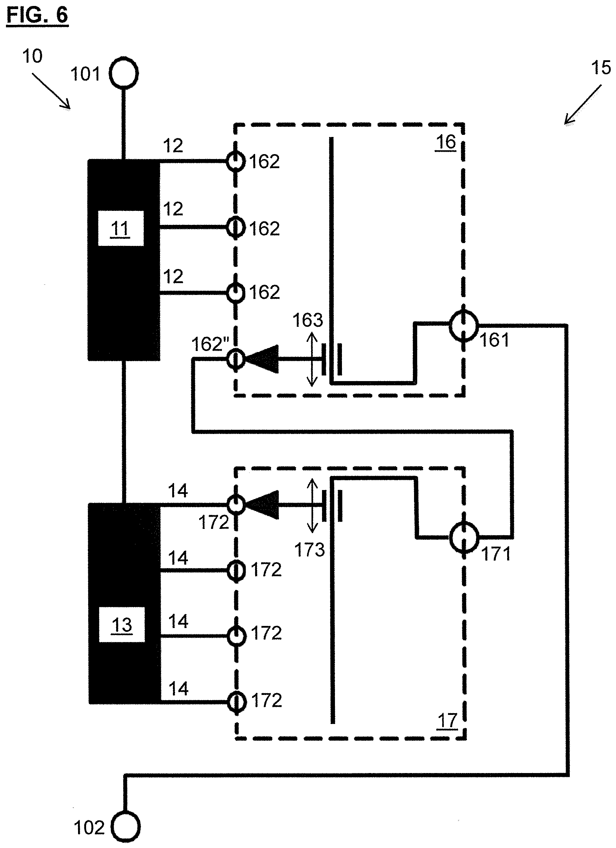

In FIG. 6 ist eine sechste Ausführungsform der Anlage 10 schematisch dargestellt. Diese Ausführungsform ähnelt der ersten Ausführungsform aus FIG. 1, sodass im Folgenden vor Allem die Unterschiede näher erläutert werden.

Bei dieser Ausführungsform entfällt die unterste erste Anzapfung 12 der ersten Ausführungsform und ist das zweite Ende der ersten Regelwicklung 11 an das zweite Ende der zweiten Regelwicklung 13 angeschlossen, sodass die Regelwicklungen 11, 13 nicht galvanisch voneinander getrennt sind.

Bei dieser Ausführungsform ist die Schaltanordnung 15 gemäß einer vierten Ausführungsform ausgebildet ist, die der ersten Ausführungsform aus FIG. 1 ähnelt, sodass im Folgenden vor Allem die Unterschiede näher erläutert werden.

Bei dieser Ausführungsform ist die in der FIG. 6 unterste erste Schaltklemme 162" nicht mit einer ersten Anzapfung 12 direkt verbunden und bildet daher eine erste Verbindungsklemme 162". Die zweite Ableitklemme 171 ist mit dieser ersten Verbindungsklemme 162" direkt verbunden, und nicht mit der ersten Ableitklemme 161. Die erste Ableitklemme 161 ist an die zweite Anlagenklemme 102 angeschlossen.

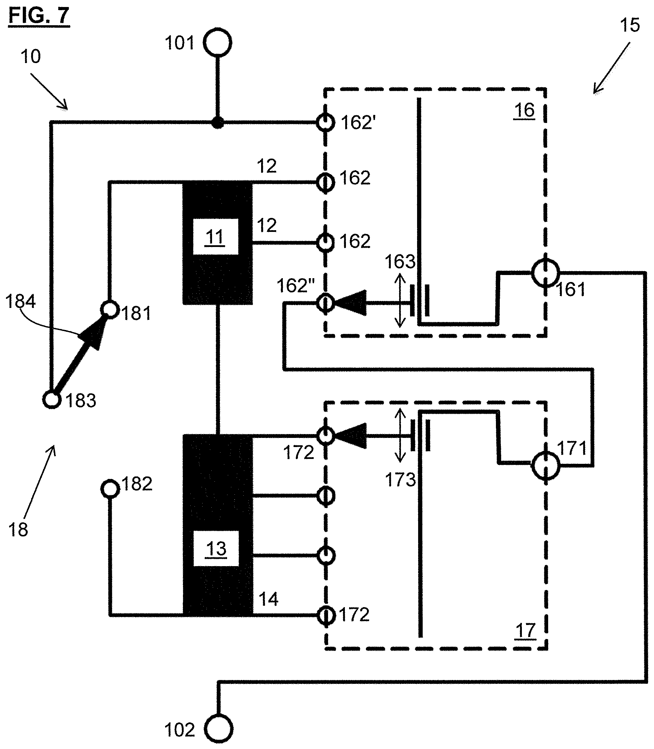

In FIG. 7 ist eine siebente Ausführungsform der Anlage 10 schematisch dargestellt. Diese Ausführungsform ähnelt der sechsten Ausführungsform aus FIG. 6, sodass im Folgenden vor Allem die Unterschiede näher erläutert werden.

Bei dieser Ausführungsform entfallen der bei der sechsten Ausführungsform vorgesehene oder vorhandene oberste Stufenwicklungsabschnitt der ersten Regelwicklung 11, der zwischen den beiden in der FIG. 6 obersten ersten Anzapfungen 12 liegt, sowie die oberste erste Anzapfung 12.

Bei dieser Ausführungsform ist die Schaltanordnung 15 gemäß einer fünften Ausführungsform ausgebildet, die der vierten Ausführungsform aus FIG. 6 ähnelt, sodass im Folgenden vor Allem die Unterschiede näher erläutert werden.

Bei dieser Ausführungsform entfällt die bei der vierten Ausführungsform vorgesehene oder vorhandene oberste erste Stufenklemme 162. Die Schaltanordnung 15 umfasst für beide Laststufenschalter 16, 17 gemeinsam einen als Wender ausgebildeten Vorwähler 18 mit zwei Vorwählerklemmen 181, 182, einer Basisklemme 183 und einem Bewegtkontakt 184. Die erste Vorwählerklemme 181 ist mit dem ersten Ende der ersten Regelwicklung 23, die zweite Vorwählerklemme 182 mit dem ersten Ende der zweiten Regelwicklung 24 und die Basisklemme 183 mit der ersten Anlagenklemme 101 direkt verbunden.

Vorzugsweise umfasst der erste Laststufenschalter 16 eine Kommutierungsklemme 162', die von dem ersten Bewegtkontaktsystem 163 kontaktiert werden kann und mit der Basisklemme 183, aber nicht mit einer der ersten Anzapfungen 12 verbunden ist.

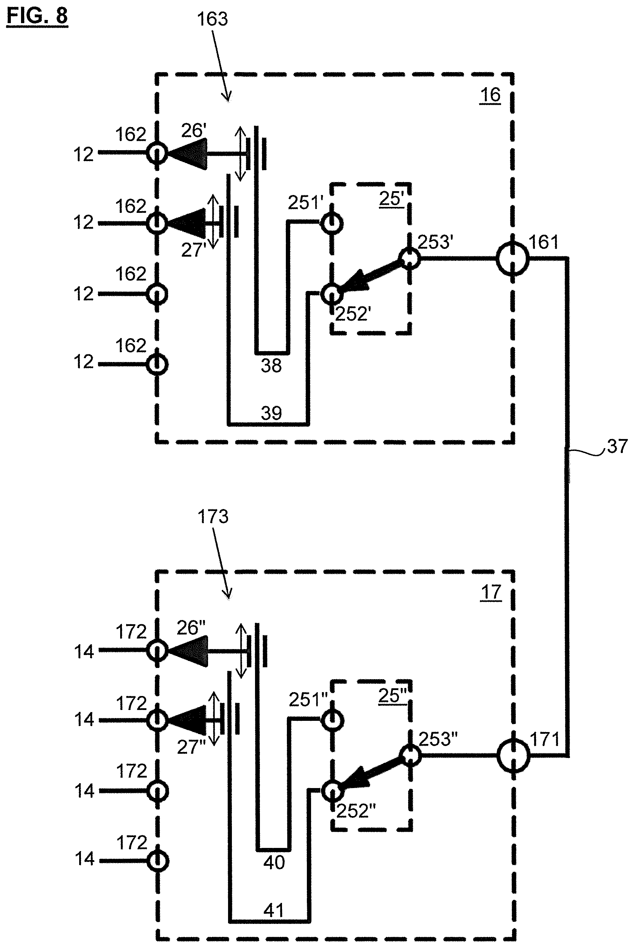

In FIG. 8 ist oben eine erste Ausführungsform des ersten Laststufenschalters 16 schematisch dargestellt. Der zweite Laststufenschalter 17 ist in FIG. 8 unten schematisch dargestellt und ebenfalls gemäß dieser Ausführungsform ausgebildet, kann aber auch anders ausgebildet sein.

Bei dieser Ausführungsform ist jeder Laststufenschalter 16/17 als Lastschalter ausgebildet und umfasst einen Lastumschalter 25'/25" mit zwei Umschalterklemmen 251'/251", 252'/252", einer Basisklemme 253'/253" und einem Bewegtkontakt, der mit der jeweiligen Basisklemme 253'/253" verbunden und kann wahlweise mit jeder der jeweiligen Umschalterklemmen 251'/251", 252'/252" unterbrechungsfrei und unter Last in elektrischen Kontakt gebracht werden kann. Das erste Bewegtkontaktsystem 163 ist als Wähler ausgebildet und wird auch als erster Wähler 163 bezeichnet. Das zweite Bewegtkontaktsystem 173 ist als Wähler ausgebildet und wird auch als zweiter Wähler 173 bezeichnet. Jeder Wähler 163/173 umfasst zwei bewegliche Wählerarme 26'/26", 27'/27", die unabhängig voneinander bewegt werden können. Jeder erste Wählerarm 26'/26" ist mit der jeweiligen ersten Umschalterklemme 251'/251" verbunden und kann wahlweise mit der - in der FIG. 8 von oben gezählt - jeweiligen ersten und dritten Schaltklemme 162/172 in elektrischen Kontakt gebracht werden. Jeder zweite Wählerarm 27'/27" ist mit der jeweiligen zweiten Umschalterklemme 252'/252" verbunden und kann wahlweise mit der jeweiligen zweiten und vierten Schaltklemme 162/172 in elektrischen Kontakt gebracht werden.

In FIG. 9 ist oben eine zweite Ausführungsform des ersten Laststufenschalters 16 schematisch dargestellt. Der zweite Laststufenschalter 17 ist in FIG. 9 unten schematisch dargestellt und ebenfalls gemäß dieser Ausführungsform ausgebildet, kann aber auch anders ausgebildet sein. Diese Ausführungsform ähnelt der ersten Ausführungsform aus FIG. 8, sodass im Folgenden vor Allem die Unterschiede näher erläutert werden.

Bei dieser Ausführungsform ist jeder Laststufenschalter 16/17 als Lastwähler ausgebildet. Der Lastumschalter 25'/25" der ersten Ausführungsform entfällt. In jedem Laststufenschalter 16/17 können die jeweiligen Wählerarme 26'/26", 27'/27" nur gemeinsam und mit vorbestimmtem Abstand voneinander bewegt werden. Sie sind mit der jeweiligen Ableitklemme 161/171 verbunden und können wahlweise mit jeder der jeweiligen Schaltklemmen 162/172 unterbrechungsfrei und unter Last in elektrischen Kontakt gebracht werden. Jede Schaltklemme 162/172 weist eine zu dem jeweiligen Wählerarm 26'/26", 27'/27" weisende Kontaktfläche auf. In jedem Laststufenschalter 16/17 ist der Abstand zwischen den Kontaktspitzen der jeweiligen Wählerarme 26'/26", 27'/27" in Hinblick auf die Abmessungen der Kontaktflächen in Bewegungsrichtung derart gewählt, dass im stationären Zustand, der in der FIG. 9 dargestellt ist, beide Kontaktspitzen an derselben Kontaktfläche anliegen. Die Lücke zwischen jeweils zwei benachbarten Kontaktflächen ist kleiner als der Abstand zwischen den Kontaktspitzen gewählt, sodass beim Bewegen der Wählerarme 26'/26", 27'/27" zu einer benachbarten Kontaktfläche immer wenigstens einer der Wählerarme 26'/26", 27'/27" an wenigstens einer der benachbarten Kontaktflächen anliegt.

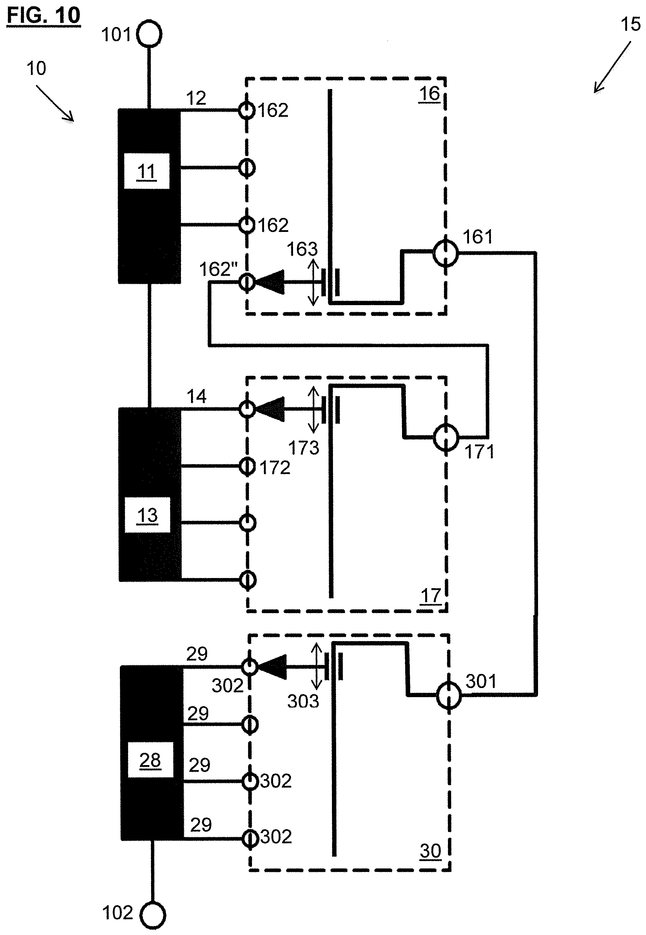

In FIG. 10 ist eine achte Ausführungsform der Anlage 10 schematisch dargestellt. Diese Ausführungsform ähnelt der sechsten Ausführungsform aus FIG. 6, sodass im Folgenden vor Allem die Unterschiede näher erläutert werden.

Bei dieser Ausführungsform umfasst die Anlage 10 eine dritte Regelwicklung 28 mit vier dritten Anzapfungen 29, die von den beiden anderen Regelwicklungen 11, 13 galvanisch getrennt ist und auf dem gemeinsamen Magnetkern sitzt, sodass alle drei Regelwicklungen 11, 13, 28 induktiv gekoppelt sind und von demselben magnetischen Fluss durchsetzt werden. An die zweite Anlagenklemme 102 ist nicht die erste Ableitklemme 161, sondern das in der FIG. 10 untere, erste Ende der dritten Regelwicklung 28 angeschlossen.

Bei dieser Ausführungsform ist die Schaltanordnung 15 gemäß einer sechsten Ausführungsform ausgebildet, die der vierten Ausführungsform aus FIG. 6 ähnelt, sodass im Folgenden vor Allem die Unterschiede näher erläutert werden.

Bei dieser Ausführungsform umfasst die Schaltanordnung 15 einen dritten Laststufenschalter 30 mit einer Ableitklemme 301, auch als dritte Ableitklemme 301 bezeichnet, vier Schaltklemmen 302, auch als dritte Schaltklemmen 302 bezeichnet, und einem Bewegtkontaktsystem 303, auch als drittes Bewegtkontaktsystem 303 bezeichnet.

Die dritten Schaltklemmen 302 sind jeweils den dritten Anzapfungen 29 zugeordnet und mit diesen direkt verbunden und werden auch als dritte Stufenklemmen bezeichnet. Das dritte Bewegtkontaktsystem 203 ist mit der dritten Ableitklemme 301 verbunden und kann wahlweise mit jeder der dritten Stufenklemmen 302 in elektrischen Kontakt gebracht werden.

Bei dieser Ausführungsform ist die erste Ableitklemme 161 nicht an die zweite Anlagenklemme 102, sondern an die dritte Ableitklemme 301 angeschlossen.

Die in der FIG. 10 oberste dritte Anzapfung 29 ist an das obere, zweite Ende der dritten Regelwicklung 28 angeschlossen, und die unterste dritte Anzapfung 29 ist an das zweite Ende der dritten Regelwicklung 28 angeschlossen beziehungsweise bildet dieses zweite Ende.

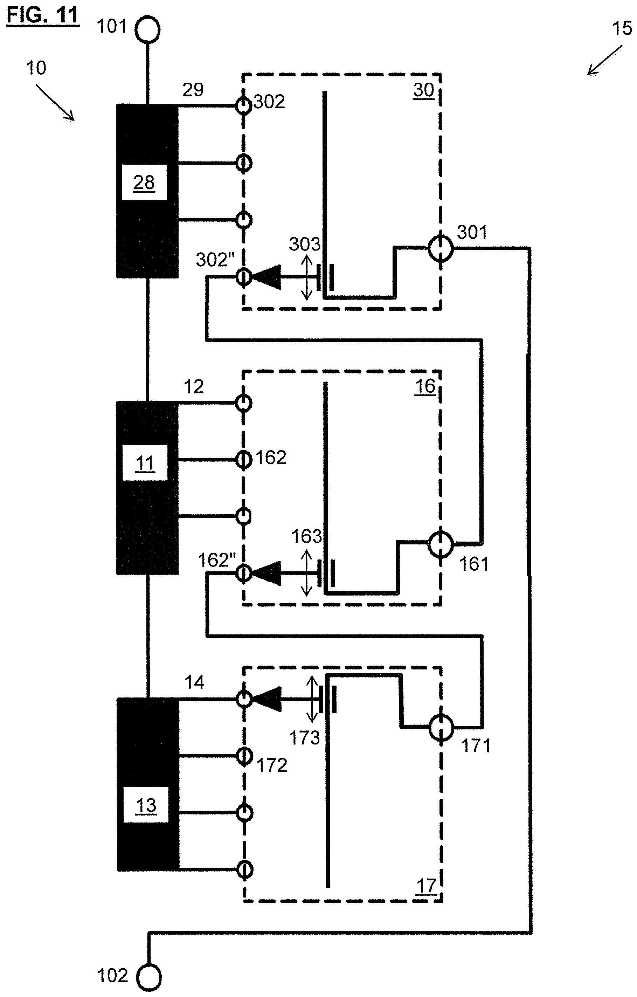

In FIG. 11 ist eine neunte Ausführungsform der Anlage 10 schematisch dargestellt. Diese Ausführungsform ähnelt der sechsten Ausführungsform aus FIG. 6, sodass im Folgenden vor Allem die Unterschiede näher erläutert werden.

Bei dieser Ausführungsform umfasst die Anlage 10 eine dritte Regelwicklung 28 mit drei dritten Anzapfungen 29, die zwischen die erste Anlagenklemme 101 und das erste Ende der ersten Regelwicklung 11 in Serie geschaltet ist und auf dem gemeinsamen Magnetkern sitzt, sodass alle drei Regelwicklungen 11, 13, 28 induktiv gekoppelt sind und von demselben magnetischen Fluss durchsetzt werden.

Bei dieser Ausführungsform ist die Schaltanordnung 15 gemäß einer siebenten Ausführungsform ausgebildet, die der sechsten Ausführungsform aus FIG. 10 ähnelt, sodass im Folgenden vor Allem die Unterschiede näher erläutert werden.

Bei dieser Ausführungsform ist der dritte Laststufenschalter 30 baugleich mit dem ersten Laststufenschalter 16 und analog zu diesem mit der dritten Regelwicklung 28 verbunden. Die in der FIG. 11 unterste dritte Schaltklemme 302" bildet eine dritte Verbindungsklemme 302".

Die erste Ableitklemme 161 ist nicht an die zweite Anlagenklemme 102, sondern an die dritte Verbindungsklemme 302" angeschlossen. An die zweite Anlagenklemme 102 ist die dritten Ableitklemme 301 angeschlossen.

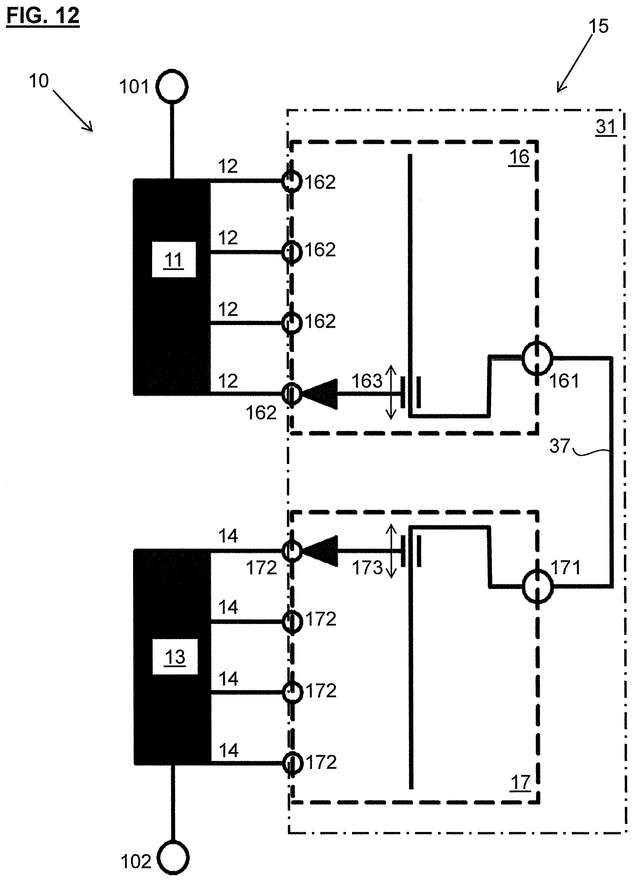

In FIG. 12 ist eine zehnte Ausführungsform der Anlage 10 schematisch dargestellt. Diese Ausführungsform ähnelt der ersten Ausführungsform aus FIG. 1, sodass im Folgenden vor Allem die Unterschiede näher erläutert werden.

Bei dieser Ausführungsform ist die Schaltanordnung 15 gemäß einer achten Ausführungsform ausgebildet, die der ersten Ausführungsform aus FIG. 1 ähnelt, sodass im Folgenden vor Allem die Unterschiede näher erläutert werden.

Bei dieser Ausführungsform umfasst die Schaltanordnung 15 ein einziges Schaltgerät 31 mit einem Gestell (nicht dargestellt), an dem die Laststufenschalter 16, 17 angebracht sind. Somit sind die Laststufenschalter 16, 17 als Baueinheit in dem gemeinsamen Schaltgerät 31 zusammengefasst und werden durch dieses realisiert und gebildet. Das Schaltgerät 31 weist als Schnittstellen nach außen die Schaltklemmen 162, 172 auf, an denen es an die Anzapfungen 12, 14 angeschlossen ist.

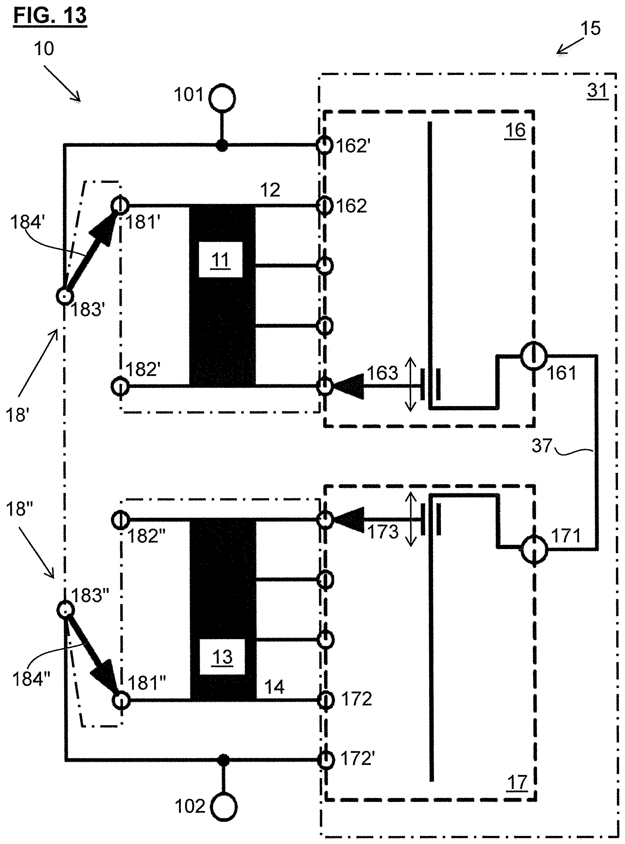

In FIG. 13 ist eine elfte Ausführungsform der Anlage 10 schematisch dargestellt. Diese Ausführungsform ähnelt der zweiten Ausführungsform aus FIG. 2, sodass im Folgenden vor Allem die Unterschiede näher erläutert werden.

Bei dieser Ausführungsform ist die Schaltanordnung 15 gemäß einer neunten Ausführungsform ausgebildet, die der zweiten Ausführungsform aus FIG. 2 ähnelt, sodass im Folgenden vor Allem die Unterschiede näher erläutert werden.

Bei dieser Ausführungsform umfasst die Schaltanordnung 15 ein einziges Schaltgerät 31 mit einem Gestell (nicht dargestellt), an dem die Laststufenschalter 16, 17 einschließlich ihrer Vorwähler 18', 18" angebracht sind. Somit sind die Laststufenschalter 16, 17 als Baueinheit in dem gemeinsamen Schaltgerät 31 zusammengefasst und werden durch dieses realisiert und gebildet. Das Schaltgerät 31 weist als Schnittstellen nach außen die Schaltklemmen 162, 162', 172, 172', an denen es an die Anzapfungen 12, 14 und die erste und zweite Anlagenklemme 101, 102 angeschlossen ist, sowie die ersten und zweiten Vorwählerklemmen 181', 181", 182', 182" und die Basisklemmen 183', 183" auf, an denen es an die Enden der Regelwicklungen 11, 13 und die erste und zweite Anlagenklemme 101, 102 angeschlossen ist.

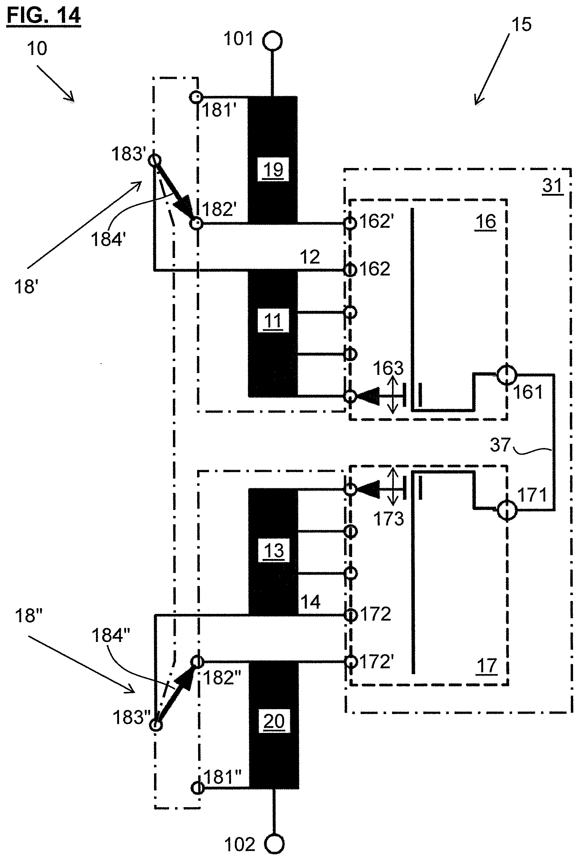

In FIG. 14 ist eine zwölfte Ausführungsform der Anlage 10 schematisch dargestellt. Diese Ausführungsform ähnelt der dritten Ausführungsform aus FIG. 3, sodass im Folgenden vor Allem die Unterschiede näher erläutert werden.

Bei dieser Ausführungsform ist die Schaltanordnung 15 gemäß einer zehnten Ausführungsform ausgebildet, die der dritten Ausführungsform aus FIG. 3 ähnelt, sodass im Folgenden vor Allem die Unterschiede näher erläutert werden.

Bei dieser Ausführungsform umfasst die Schaltanordnung 15 ein einziges Schaltgerät 31 mit einem Gestell (nicht dargestellt), an dem die Laststufenschalter 16, 17 einschließlich ihrer Vorwähler 18', 18" angebracht sind. Somit sind die Laststufenschalter 16, 17 als Baueinheit in dem gemeinsamen Schaltgerät 31 zusammengefasst und werden durch dieses realisiert und gebildet. Das Schaltgerät 31 weist als Schnittstellen nach außen die Schaltklemmen 162, 162', 172, 172', an denen es an die Anzapfungen 12, 14 und die zweiten Enden der Grobwicklungen 19, 20 angeschlossen ist, sowie die ersten und zweiten Vorwählerklemmen 181', 181", 182', 182" und die Basisklemmen 183', 183" auf, an denen es an die Enden der Grobwicklungen 19, 20 und die ersten Enden der Regelwicklungen 11, 13 angeschlossen ist.

In einer nicht dargestellten Ausführungsform sind die drei Laststufenschalter 16, 17, 30 der Schaltanordnung 15, die gemäß der sechsten Ausführungsform aus FIG. 10 oder der siebenten Ausführungsform aus FIG. 11 ausgebildet ist, als Baueinheit in dem gemeinsamen Schaltgerät 31 zusammengefasst und werden durch dieses realisiert und gebildet.

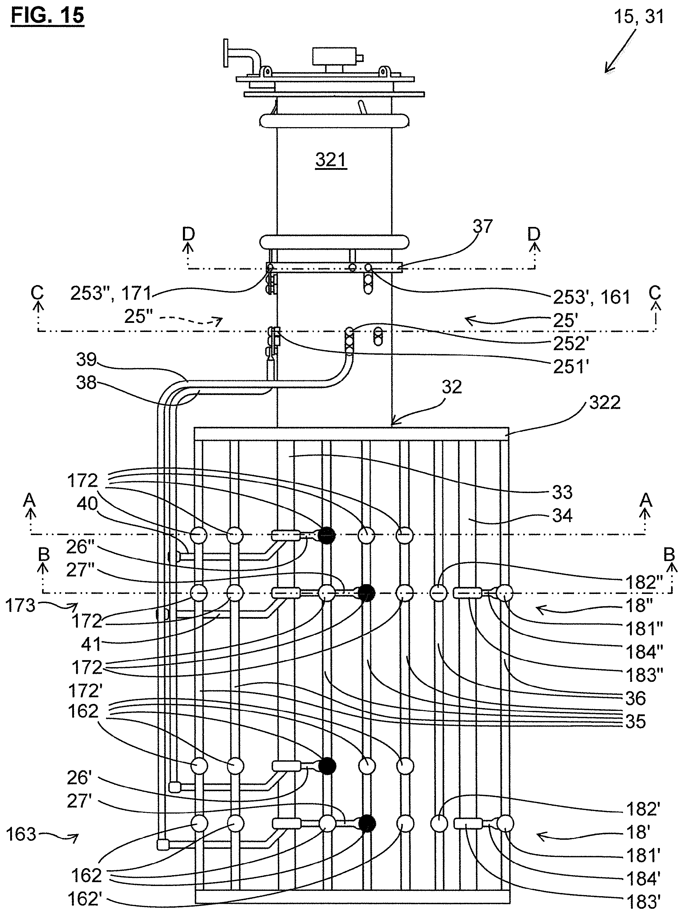

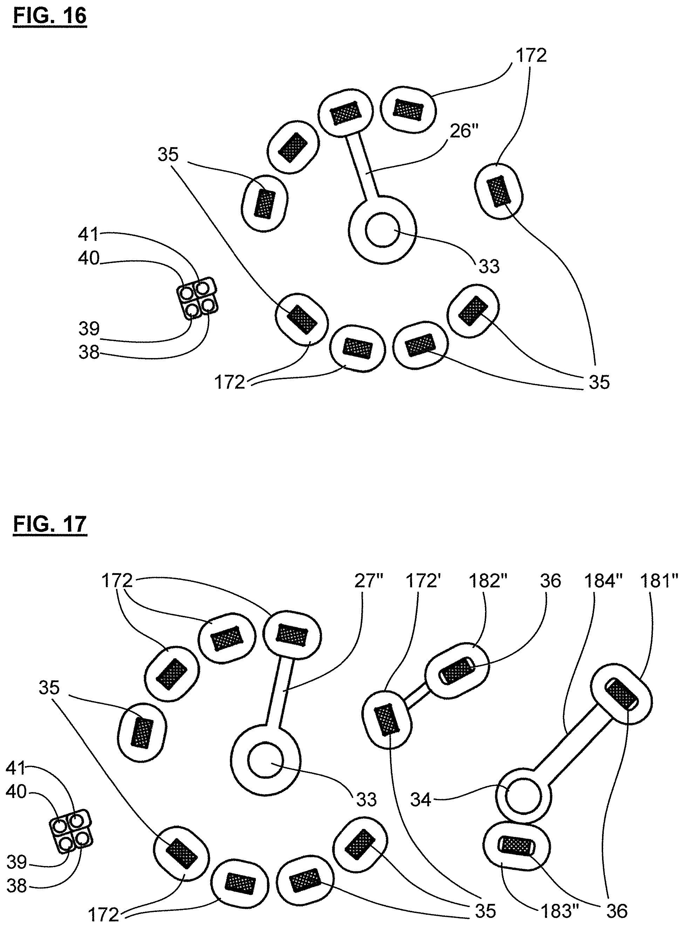

In FIG. 15, 16, 17, 18 und 19 ist eine elfte Ausführungsform der Schaltanordnung 15 schematisch dargestellt, die der zehnten Ausführungsform aus FIG. 14 ähnelt, sodass im Folgenden vor Allem die Unterschiede näher erläutert werden.

Bei dieser Ausführungsform ist jeder Laststufenschalter 16/17 gemäß der ersten Ausführungsform aus FIG. 8 ausgebildet, umfasst jedoch siebzehn erste Schaltklemmen 162, siebzehn zweite Schaltklemmen 172 und gemäß der zehnten Ausführungsform aus FIG. 14 zusätzlich den als Grobwähler ausgebildeten Vorwähler 18'/18". Das Gestell 32 umfasst ein Lastumschaltergestell 321, an dem die Lastumschalter 25', 25" angebracht sind, und ein Wählergestell 322, an dem die Wähler 163, 173 übereinander angebracht sind. Das Lastumschaltergestell 321 ist als zylindrisches Ölgefäß aus elektrischem Isolierstoff ausgebildet, das mit Isolieröl gefüllt ist und in seinem Inneren die Lastumschalter 25', 25" aufnimmt. Das Wählergestell 322 ist an der Unterseite des Lastumschaltergestells 321 befestigt und umfasst eine Wählerachse 33, eine Vorwählerachse 34 und ein käfigartiges Gerüst mit vertikalen Wählerstäben 35 aus elektrischem Isolierstoff und mit vertikalen Vorwählerstäben 36 aus elektrischem Isolierstoff.

Die Wählerstäbe 35 sind auf einem ersten Kreis um die Wählerachse 33 herum angeordnet, die Vorwählerstäbe 36 sind auf einem zweiten Kreis um die Vorwählerachse 34 herum angeordnet. Die Wählerarme 26', 26", 27', 27" sind drehbar an der Wählerachse 33 übereinander angebracht, und die Lastumschalterarme 254', 254" sind drehbar an der Vorwählerachse 34 übereinander angebracht. In jedem Wähler 163/173 sind die dem jeweiligen ersten Wählerarm 26'/26" zugeordneten Schaltklemmen 162/172 an den Wählerstäben 35 in einer Ebene befestigt, in der dieser erste Wählerarm 26'/26" liegt, und sind die dem jeweiligen zweiten Wählerarm 27'/27" zugeordneten Schaltklemmen 162/172 und die dem jeweiligen zweiten Wählerarm 27'/27" zugeordnete Kommutierungsklemme 162'/172' an den Wählerstäben 35 in einer Ebene befestigt, in der dieser zweite Wählerarm 27'/27" liegt. In jedem Vorwähler 18'/18" sind die dem jeweiligen Bewegtkontakt 184'/184" zugeordneten Vorwählerklemmen 181'/182'/181"/182" und die dem jeweiligen Bewegtkontakt 184'/184" zugeordnete Basisklemme 183'/183" an den Vorwählerstäben 36 in einer Ebene befestigt, in der dieser Bewegtkontakt 184'/184" liegt. Die erste Kommutierungsklemme 162' ist an die zweite Vorwählerklemme 182' des ersten Vorwählers 18' angeschlossen, und die zweite Kommutierungsklemme 172' ist an die zweite Vorwählerklemme 182" des zweiten Vorwählers 18 angeschlossen.

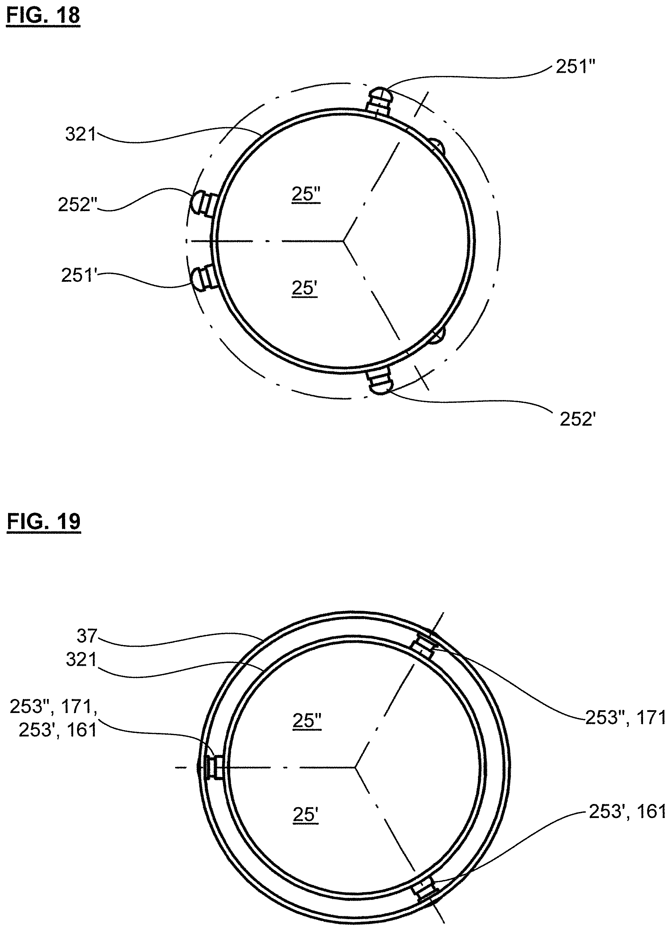

Das zylindrische Lastumschaltergestell 321 ist symmetrisch in drei 120°-Sektoren unterteilt, von denen der in FIG. 18 und 19 untere Sektor den ersten Lastumschalter 25' und der obere Sektor den zweiten Lastumschalter 25" aufnimmt. In der Wand des Lastumschaltergestells 321 ist in einer unteren Ebene die Umschalterklemme 251' des ersten Lastumschalters 25' im unteren Sektor nahe zum oberen Sektor befestigt, die zweite Umschalterklemme 252' des ersten Lastumschalters 25' im unteren Sektor nahe zum rechten Sektor befestigt, die erste Umschalterklemme 251" des zweiten Lastumschalters 25" im oberen Sektor nahe zum rechten Sektor befestigt, und die zweite Umschalterklemme 252" des zweiten Lastumschalters 25" im oberen Sektor nahe zum unteren Sektor befestigt. In der Wand des Lastumschaltergestells 321 sind in einer oberen Ebene auf den Sektorengrenzen drei Klemmen befestigt, von denen die in FIG. 19 untere Klemme als Basisklemme 253' des ersten Lastumschalters 25' und als erste Ableitklemme 161 dient, die obere Klemme als Basisklemme 253" des zweiten Lastumschalters 25" und als zweite Ableitklemme 171 dient, und die linke Klemme sowohl als Basisklemme 253' des ersten Lastumschalters 25' und als erste Ableitklemme 161 als auch als Basisklemme 253" des zweiten Lastumschalters 25" und als zweite Ableitklemme 171 dient. Ein Ableitring 37 ist an diese drei Klemmen angeschlossen und dient somit als Verbindungsleitung 37 zwischen den Ableitklemmen 161, 171.

Ein Laststufenschalter mit einem derartigen Wählergestell und einem derartigen Lastumschaltergestell wird beispielsweise von Maschinenfabrik Reinhausen GmbH, Deutschland unter der Bezeichnung »VACUTAP^{®} VRG II 1302« angeboten.

Eine erste Verbindungsleitung 38 ist an den ersten Wählerarm 26' des ersten Wählers 163 und die erste Umschalterklemme 251' des ersten Lastumschalters 25' angeschlossen. Eine zweite Verbindungsleitung 39 ist an den zweiten Wählerarm 27' des ersten Wählers 163 und die zweite Umschalterklemme 252' des ersten Lastumschalters 25' angeschlossen. Eine dritte Verbindungsleitung 40 (in FIG. 15 teilweise durch die zweite Verbindungsleitung 39 verdeckt) ist an den ersten Wählerarm 26" des zweiten Wählers 173 und die erste Umschalterklemme 251" des zweiten Lastumschalters 25" angeschlossen. Eine vierte Verbindungsleitung 41 (in FIG. 15 teilweise durch die erste Verbindungsleitung 38 verdeckt) ist an den zweiten Wählerarm 27" des zweiten Wählers 173 und die zweite Umschalterklemme 252" des zweiten Lastumschalters 25" angeschlossen.

Das Wählergestell 322 kann aber auch anders ausgebildet sein und beispielsweise anstelle der Wählerstäbe 35 und/oder Vorwählerstäbe 36 einen einteiligen Zylinder aus elektrischem Isolierstoff umfassen, an dem die Schaltklemmen und/oder die Kommutierungsklemmen und/oder die Vorwählerklemmen und/oder die Basisklemmen befestigt sind. Ein Laststufenschalter mit einem derartigen Wählergestell wird beispielsweise von ABB AB, Schweden unter der Bezeichnung »VUCG« angeboten, wobei dieser Laststufenschalter zusätzlich einen dritten Wähler umfasst, der zwischen den beiden anderen Wählern an dem Wählergestell angebracht ist.

Das Wählergestell 322 kann beispielsweise anstelle der Wählerstäbe 35 und/oder Vorwählerstäbe 36 teilzylinderförmige oder kreisbogenzylindrische Segmente aus elektrischem Isolierstoff, an denen die Schaltklemmen und/oder die Kommutierungsklemmen und/oder die Vorwählerklemmen und/oder die Basisklemmen befestigt sind.

Das Lastumschaltergestell 321 kann aber auch anders ausgebildet sein und beispielsweise symmetrisch in drei nebeneinander liegende Spalten unterteilt sein, von denen eine erste Spalte, die beispielsweise eine äußere Spalte ist, den ersten Lastumschalter 25' und eine zweite Spalte, die beispielsweise die andere äußere Spalte oder die mittlere Spalte ist, den zweiten Lastumschalter 25" aufnimmt. Ein Laststufenschalter mit einem derartigen Lastumschaltergestell wird beispielsweise von ABB AB, Schweden unter der Bezeichnung »VUCG« angeboten, wobei dieser Laststufenschalter zusätzlich einen dritten Lastumschalter umfasst, den die verbleibende dritte Spalte aufnimmt.

Die erfindungsgemäße Anlage 10, die erfindungsgemäße Schaltanordnung 15 und das erfindungsgemäße Schaltgerät 31 können beispielhaft unter Verwendung des oben erwähnten Laststufenschalters »VACUTAP^{®} VRG II 1302« oder des oben erwähnten Laststufenschalters »VUCG« hergestellt werden.

### BEZUGSZEICHEN

- 10: elektrische Anlage, Kompensationsdrossel, Regeltransformator
- 101/102/103/104: erste/zweite/dritte/vierte Anlagenklemme von 10
- 11: erste Regelwicklung
- 12: erste Anzapfungen, Anzapfungen von 11
- 13: zweite Regelwicklung
- 14: zweite Anzapfungen, Anzapfungen von 13
- 15: Schaltanordnung
- 16: erster Laststufenschalter
- 161: Ableitklemme von 16, erste Ableitklemme
- 162: Schaltklemmen von 16, erste Schaltklemmen
- 162': Kommutierungsklemme von 16, erste Kommutierungsklemme
- 162": Verbindungsklemme von 16, erste Verbindungsklemme
- 163: Bewegtkontaktsystem von 16, erstes Bewegtkontaktsystem, erster Wähler
- 17: zweiter Laststufenschalter
- 171: Ableitklemme von 17, zweite Ableitklemme
- 172: Schaltklemmen von 17, zweite Schaltklemmen
- 172': Kommutierungsklemme von 17, zweite Kommutierungsklemme
- 173: Bewegtkontaktsystem von 17, zweites Bewegtkontaktsystem, zweiter Wähler
- 18/18'/18": gemeinsamer/erster/zweiter Vorwähler
- 181/182/183/184: erste/zweite Vorwählerklemme/Basisklemme/Bewegtkontakt von 18
- 181'/182'/183'/184': erste/zweite Vorwählerklemme/Basisklemme/Bewegtkontakt von 18'
- 181"/182"/183"/184": erste/zweite Vorwählerklemme/Basisklemme/Bewegtkontakt von 18"
- 19: erste Grobwicklung
- 20: zweite Grobwicklung
- 21: Primärseite von 10
- 22: Sekundärseite von 10
- 23: erste Stammwicklung
- 24: zweite Stammwicklung
- 25'/25": erster/zweiter Lastumschalter
- 251'/252'/253': erste/zweite Umschalterklemmen/Basisklemme von 25'
- 251"/252"/253": erste/zweite Umschalterklemmen/Basisklemme von 25"
- 26'/26": erster Wählerarm von 163/173
- 27'/27": zweiter Wählerarm von 163/173
- 28: dritte Regelwicklung
- 29: dritte Anzapfungen, Anzapfungen von 28
- 30: dritter Laststufenschalter
- 301: Ableitklemme von 30, dritte Ableitklemme
- 302: Schaltklemmen von 30, dritte Schaltklemmen
- 302": Verbindungsklemme von 30, dritte Verbindungsklemme
- 303: Bewegtkontaktsystem von 30, drittes Bewegtkontaktsystem
- 31: Schaltgerät
- 32: Gestell
- 321: Lastumschaltergestell von 32
- 322: Wählergestell von 32
- 33: Wählerachse von 322
- 34: Vorwählerachse von 322
- 35: Wählerstäbe von 322
- 36: Vorwählerstäbe von 322
- 37: Ableitring, Verbindungsleitung zwischen 161 und 171
- 38: erste Verbindungsleitung
- 39: zweite Verbindungsleitung
- 40: dritte Verbindungsleitung
- 41: vierte Verbindungsleitung

## Patentansprüche

1. Schaltanordnung (15) für eine elektrische Anlage (10) die als Kompensationsdrossel ausgebildet ist, mit einer ersten und einer zweiten Regelwicklung (11, 13), umfassend
- einen ersten Laststufenschalter (16) mit einer ersten Ableitklemme (161) und drei ersten Schaltklemmen (162), von denen wenigstens zwei mit zugeordneten ersten Anzapfungen (12) der ersten Regelwicklung (11) verbunden werden können;
- einen zweiten Laststufenschalter (17) mit einer zweiten Ableitklemme (171) und drei zweiten Schaltklemmen (172), von denen wenigstens zwei mit zugeordneten zweiten Anzapfungen (14) der zweiten Regelwicklung (13) verbunden werden können;
wobei
- wenigstens einer der Laststufenschalter (16, 17) einen Vorwähler (18) mit zwei Vorwählerklemmen (181, 182) und einer Basisklemme (183) umfasst;
- die zweite Ableitklemme (171) mit der ersten Ableitklemme (161) verbunden ist;
**dadurch gekennzeichnet, dass**
- die Verbindung der zweiten Ableitklemme (171) mit der ersten Ableitklemme (161) keine Abzweigung aufweist; und
- die Laststufenschalter (16, 17) durch diese Verbindung seriell geschaltet sind;
- wenigstens einer der Vorwähler (18) als Grobwähler ausgebildet ist;
- die Basisklemme (183) mit einem Ende der Regelwicklung (11, 13), die dem jeweiligen Laststufenschalter (16, 17) zugeordnet ist, verbunden werden kann;
- die Vorwählerklemmen (181, 182) mit den Enden einer Grobwicklung (19, 20), die mit dieser Regelwicklung (11, 13) induktiv gekoppelt ist, verbunden sind.

2. Schaltanordnung (15) für eine elektrische Anlage (10) die als Kompensationsdrossel ausgebildet ist, mit einer ersten und einer zweiten Regelwicklung (11, 13), umfassend
- einen ersten Laststufenschalter (16) mit einer ersten Ableitklemme (161) und drei ersten Schaltklemmen (162), von denen wenigstens zwei mit zugeordneten ersten Anzapfungen (12) der ersten Regelwicklung (11) verbunden werden können;
- einen zweiten Laststufenschalter (17) mit einer zweiten Ableitklemme (171) und drei zweiten Schaltklemmen (172), von denen wenigstens zwei mit zugeordneten zweiten Anzapfungen (14) der zweiten Regelwicklung (13) verbunden werden können;
wobei
- wenigstens einer der Laststufenschalter (16, 17) einen Vorwähler (18) mit zwei Vorwählerklemmen (181, 182) und einer Basisklemme (183) umfasst;
- die zweite Ableitklemme (171) mit der ersten Ableitklemme (161) verbunden ist;
**dadurch gekennzeichnet, dass**
- die Verbindung der zweiten Ableitklemme (171) mit der ersten Ableitklemme (161) keine Abzweigung aufweist; und
- die Laststufenschalter (16, 17) durch diese Verbindung seriell geschaltet sind; wobei
- wenigstens einer der Vorwähler (18) als Wender ausgebildet ist;
- die Vorwählerklemmen (181, 182) mit den Enden der Regelwicklung (11, 13), die dem jeweiligen Laststufenschalter (16, 17) zugeordnet ist, verbunden werden können;
- die Basisklemme (183) mit einer ersten Anlagenklemme (101) der Anlage (10) oder mit einem Ende einer Stammwicklung (23, 24), die mit dieser Regelwicklung (11, 13) induktiv gekoppelt ist, verbunden ist.

3. Schaltanordnung (15) nach einem der Ansprüche 1 oder 2, wobei
- wenigstens zwei Laststufenschalter (16, 17) derart gekoppelt sind, dass sie gleichsinnig und insbesondere synchron schalten.

4. Schaltanordnung (15) nach einem der Ansprüche 1 bis 3, wobei
- der erste und zweite Laststufenschalter (16, 17) in einem gemeinsamen Schaltgerät (31) zusammengefasst oder durch ein gemeinsames Schaltgerät (31) realisiert oder gebildet sind.

5. Elektrische Anlage (10) die als Kompensationsdrossel ausgebildet, umfassend
- eine erste Regelwicklung (11) mit zwei ersten Anzapfungen (12);
- eine zweite Regelwicklung (13) mit zwei zweiten Anzapfungen (14);
- eine Schaltanordnung (15), die gemäß einem der vorherigen Ansprüche 1 bis 4 ausgebildet ist.

6. Elektrische Anlage (10) nach Anspruch 5 umfassend
- eine Stammwicklung (23, 24), die mit wenigstens einer Regelwicklung (11, 13) induktiv gekoppelt ist und insbesondere seriell geschaltet ist.

7. Elektrische Anlage (10) nacheinem der Ansprüche 5 oder 6, wobei
- wenigstens zwei Regelwicklungen (11, 13) induktiv gekoppelt sind.

8. Schaltgerät für eine elektrische Anlage (10) die als Kompensationsdrossel ausgebildet ist mit einer ersten und einer zweiten Regelwicklung (11, 13), umfassend
- eine Schaltanordnung (15), die gemäß einem der Ansprüche 1 bis 4 ausgebildet ist.

9. Schaltgerät nach Anspruch 8, wobei
- das Schaltgerät (31) ein Gestell (32) umfasst, an dem zumindest der erste und zweite Laststufenschalter (16, 17) angebracht sind.

10. Schaltgerät nach Anspruch 8 oder 9, wobei
- der erste Laststufenschalter (16) einen ersten Lastumschalter (25') und einen ersten Wähler (163) umfasst;
- der zweite Laststufenschalter (17) einen zweiten Lastumschalter (25") und einen zweiten Wähler (173) umfasst;
- das Gestell (32) ein Lastumschaltergestell (321) und ein Wählergestell (322) umfasst;
- die Lastumschalter (25', 25") an dem Lastumschaltergestell (321) und die Wähler (163, 173) an dem Wählergestell (322) angebracht sind.

## Claims

1. Switching arrangement (15) for an electrical system (10) which is designed as a compensating choke, having a first and a second tap winding (11, 13) , comprising
- a first on-load tap-changer (16) with a first leakage terminal (161) and three first switching terminals (162), of which at least two can be connected to associated first taps (12) of the first tap winding (11);
- a second on-load tap-changer (17) having a second leakage terminal (171) and three second switching terminals (172), at least two of which can be connected to associated second taps (14) of the second tap winding (13);
wherein
- at least one of the on-load tap-changers (16, 17) comprises a change-over selector (18) with two change-over selector terminals (181, 182) and a base terminal (183)
- the second tap terminal (171) is connected to the first tap terminal (161) ;
**characterized in that**
- the connection of the second leakage terminal (171) to the first leakage terminal (161) does not have a branch; and
- the on-load tap-changers (16, 17) are connected in series through this connection;
- at least one of the change-over selectors (18) is designed as a coarse change-over selector;
- the base terminal (183) can be connected to one end of the tap winding (11, 13) associated with the respective on-load tap-changer (16, 17);
- the preselector terminals (181, 182) are connected to the ends of a coarse winding (19, 20) which is inductively coupled to this tap winding (11, 13).

2. Switching arrangement (15) for an electrical system (10) which is designed as a compensating choke, having a first and a second tap winding (11, 13), comprising
- a first on-load tap-changer (16) with a first leakage terminal (161) and three first switching terminals (162), at least two of which can be connected to associated first taps (12) of the first tap winding (11);
- a second on-load tap-changer (17) with a second leakage terminal (171) and three second switching terminals (172), at least two of which can be connected to associated second taps (14) of the second tap winding (13);
wherein
- at least one of the on-load tap-changers (16, 17) comprises a change-over selector (18) with two change-over selector terminals (181, 182) and a base terminal (183)
- the second tap terminal (171) is connected to the first tap terminal (161);
**characterized in that**
- the connection of the second leakage terminal (171) to the first leakage terminal (161) does not have a branch; and
- the on-load tap-changers (16, 17) are connected in series through this connection;
wherein
- at least one of the change-over selectors (18) is designed as a reversing change-over selector
- the preselector terminals (181, 182) can be connected to the ends of the tap winding (11, 13) associated with the respective on-load tap-changer (16, 17);
- the base terminal (183) is connected to a first system terminal (101) of the system (10) or to one end of a main winding (23, 24) which is inductively coupled to this tap winding (11, 13).

3. Switching arrangement (15) according to one of claims 1 or 2, wherein
- at least two on-load tap-changers (16, 17) are coupled in such a way that they switch in the same direction and in particular synchronously.

4. Switching arrangement (15) according to one of claims 1 to 3, wherein
- the first and second on-load tap-changers (16, 17) are combined in a common switching device (31) or are realized or formed by a common switching device (31).

5. Electrical system (10) which is designed as a compensating choke, comprising
- a first tap winding (11) with two first taps (12);
- a second tap winding (13) with two second taps (14);
- a switching arrangement (15) designed according to one of the previous claims 1 to 4.

6. Electrical system (10) according to claim 5 comprising
- a main winding (23, 24) which is inductively coupled to at least one tap winding (11, 13) and, in particular, is connected in series.

7. Electrical system (10) according to any one of claims 5 or 6, wherein
- at least two tap windings (11, 13) are inductively coupled.

8. Switching device for an electrical system (10) which is designed as a compensating choke with a first and a second tap winding (11, 13), comprising
- a switching arrangement (15) which is designed according to one of claims 1 to 4.

9. Switching device according to claim 8, wherein
- the switching device (31) comprises a frame (32) on which at least the first and second on-load tap-changers (16, 17) are mounted.

10. Switchgear according to claim 8 or 9, wherein
- the first on-load tap-changer (16) comprises a first diverter switch operation (25') and a first selector (163);
- the second on-load tap-changer (17) comprises a second diverter switch operation (25") and a second selector (173);
- the frame (32) comprises a diverter switch frame (321) and a selector frame (322);
- the diverter switches (25', 25") are attached to the diverter switch operation frame (321) and the selectors (163, 173) are attached to the selector frame (322).

## Revendications

1. Dispositif de commutation (15) pour une installation électrique (10) qui est conçue comme une bobine de compensation, avec un premier et un deuxième enroulement de régulation (11, 13) , comprenant
- un premier changeur de prises en charge (16) avec une première borne de dérivation (161) et trois premières bornes de commutation (162), dont au moins deux peuvent être reliées à des premières prises associées (12) du premier enroulement de régulation (11) ;
- un deuxième changeur de prises en charge (17) avec une deuxième borne de dérivation (171) et trois deuxièmes bornes de commutation (172), dont au moins deux peuvent être reliées à des deuxièmes prises associées (14) du deuxième enroulement de régulation (13) ;
où
- au moins un des changeurs de prises en charge (16, 17) comprend un présélecteur (18) avec deux bornes de présélection (181, 182) et une borne de base (183) ;
- la deuxième borne de dérivation (171) est connectée à la première borne de dérivation (161) ;
**caractérisé en ce que**
- la connexion de la deuxième borne de dérivation (171) à la première borne de dérivation (161) ne comporte pas de dérivation ; et
- les changeurs de prises en charge (16, 17) sont connectés en série par cette connexion ;
- au moins l'un des présélecteurs (18) est conçu comme un sélecteur grossier ;
- la borne de base (183) peut être reliée à une extrémité de l'enroulement de régulation (11, 13) associé au changeur de prises en charge (16, 17) respectif ;
- les bornes de présélection (181, 182) sont reliées aux extrémités d'un enroulement grossier (19, 20) qui est couplé par induction à cet enroulement de régulation (11, 13).

2. Dispositif de commutation (15) pour une installation électrique (10) qui est conçue comme une bobine de compensation, avec un premier et un deuxième enroulement de régulation (11, 13), comprenant
- un premier changeur de prises en charge (16) avec une première borne de dérivation (161) et trois premières bornes de commutation (162), dont au moins deux peuvent être reliées à des premières prises associées (12) du premier enroulement de régulation (11) ;
- un second changeur de prises en charge (17) comprenant une seconde borne de dérivation (171) et trois secondes bornes de commutation (172), dont au moins deux peuvent être connectées à des secondes prises associées (14) du second enroulement de régulation (13) ;
où
- au moins un des changeurs de prises en charge (16, 17) comprend un présélecteur (18) avec deux bornes de présélection (181, 182) et une borne de base (183) ;
- la deuxième borne de dérivation (171) est connectée à la première borne de dérivation (161) ;
**caractérisé en ce que**
- la connexion de la deuxième borne de dérivation (171) à la première borne de dérivation (161) ne comporte pas de dérivation ; et
- les changeurs de prises en charge (16, 17) sont connectés en série par cette connexion ; dans lequel
- au moins l'un des présélecteurs (18) est conçu comme un inverseur ;
- les bornes de présélection (181, 182) peuvent être connectées aux extrémités de l'enroulement de régulation (11, 13) associé à chaque changeur de prises en charge (16, 17) ;
- la borne de base (183) est reliée à une première borne d'installation (101) de l'installation (10) ou à une extrémité d'un enroulement de base (23, 24) qui est couplé par induction à cet enroulement de régulation (11, 13).

3. Dispositif de commutation (15) selon l'une des revendications 1 ou 2, dans lequel
- au moins deux changeurs de prises en charge (16, 17) sont couplés de telle sorte qu'ils commutent dans le même sens et notamment de manière synchrone.

4. Dispositif de commutation (15) selon l'une des revendications 1 à 3, dans lequel
- Le premier et le deuxième changeur de prises en charge (16, 17) sont regroupés dans un appareil de commutation commun (31) ou sont réalisés ou formés par un appareil de commutation commun (31).

5. Installation électrique (10) qui est conçue comme une bobine de compensation, comprenant
- un premier enroulement de régulation (11) avec deux premières prises (12) ;
- un deuxième enroulement de régulation (13) avec deux deuxièmes prises (14) ;
- un dispositif de commutation (15) réalisé selon l'une quelconque des revendications précédentes 1 à 4.

6. Installation électrique (10) selon la revendication 5, comprenant
- un enroulement de base (23, 24) qui est couplé par induction à au moins un enroulement de régulation (11, 13) et qui est notamment monté en série.

7. Installation électrique (10) selon l'une des revendications 5 ou 6, dans laquelle
- au moins deux enroulements de régulation (11, 13) sont couplés par induction.

8. Appareil de commutation pour une installation électrique (10) qui est conçue comme une bobine de compensation avec un premier et un deuxième enroulement de régulation (11, 13), comprenant
- un dispositif de commutation (15) réalisé selon l'une des revendications 1 à 4.

9. Appareil de commutation selon la revendication 8, dans lequel
- L'appareil de commutation (31) comprend un châssis (32) sur lequel sont montés au moins le premier et le deuxième changeur de prises en charge (16, 17).

10. Appareil de commutation selon la revendication 8 ou 9, dans lequel
- le premier changeur de prises en charge (16) comprend un premier commutateur de charge (25') et un premier sélecteur (163) ;
- le deuxième changeur de prises en charge (17) comprend un deuxième commutateur de prise en charge (25") et un deuxième sélecteur (173) ;
- le châssis (32) comprend un châssis de commutateur de charge (321) et un châssis de sélecteur (322) ;
- les commutateurs de charge (25', 25") sont montés sur le châssis de commutation de charge (321) et les sélecteurs (163, 173) sont montés sur le châssis de sélecteur (322).
